(19)

Europäisches Patentamt
European Patent Office
Office européen des brevets

(11) **EP 4 647 325 A1**

(12) **EUROPEAN PATENT APPLICATION**
published in accordance with Art. 153(4) EPC

(43) Date of publication:
**12.11.2025 Bulletin 2025/46**

(21) Application number: **23922874.5**

(22) Date of filing: **10.11.2023**

(51) International Patent Classification (IPC):
**B62D 25/20** (2006.01)     **B60K 1/04** (2019.01)

(52) Cooperative Patent Classification (CPC):
**B62D 25/025; B60K 1/04; B62D 21/157;**
**B62D 25/20**

(86) International application number:
**PCT/JP2023/040552**

(87) International publication number:
**WO 2024/171541 (22.08.2024 Gazette 2024/34)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.02.2023 JP 2023022775**

(71) Applicant: **JFE Steel Corporation**
**Tokyo 100-0011 (JP)**

(72) Inventors:
• **HIGAI, Kazuhiko**
  **Tokyo 100-0011 (JP)**
• **YAMAMOTO, Takayuki**
  **Tokyo 100-0011 (JP)**
• **SHIOZAKI, Tsuyoshi**
  **Tokyo 100-0011 (JP)**
• **ISHIKAWA, Toshiharu**
  **Tokyo 100-0011 (JP)**
• **NAKAGAITO, Tatsuya**
  **Tokyo 100-0011 (JP)**
• **KAWASAKI, Yoshiyasu**
  **Tokyo 100-0011 (JP)**
• **TOJI, Yuki**
  **Tokyo 100-0011 (JP)**

(74) Representative: **Grünecker Patent- und**
**Rechtsanwälte**
**PartG mbB**
**Leopoldstraße 4**
**80802 München (DE)**

(54) **SIDE SILL STRUCTURE FOR AUTOMOBILE, AND CAR UNDERBODY STRUCTURE**

(57)     In a closed sectional space 3 in a side sill 1, an impact absorption structural portion 4 is provided using a vertical partition member 2 that vertically passes through the space. The impact absorption structural portion 4 includes a horizontal partition member 5 that traverses closed sectional spaces 3a and 3b on a vehicle body inner side and an outer side partitioned by the vertical partition member 2 in a vehicle width direction, and a bulkhead 6 provided along the vehicle width direction in upper spaces 30a and 30b partitioned by the horizontal partition member 5. The horizontal partition members 5 and the bulkheads 6 on the vehicle body inner side and the outer side are disposed to face each other with the vertical partition member 2 sandwiched therebetween, and beads are formed in the horizontal partition member 5 along the vehicle width direction. In this side sill structure, desired crash worthiness can be obtained even when the number of bulkheads 6 to be installed is reduced, so that a high collision energy absorption property can be obtained with a small collision deformation amount while suppressing an increase in weight due to a structural member.

FIG.1

**Description**

Field

The present invention relates to a side sill structure of a side portion of a vehicle body of an automobile and a vehicle body lower structure including the side sill, and particularly relates to a structure suitable for an automobile including a battery module below a floor panel between both side sills.

Background

In general, a battery module is mounted below a floor panel of a battery powered vehicle (battery electric vehicle), and the battery module includes an internal battery cell and a battery case for storing the battery cell. In general, a battery case has a role of protecting a battery cell from a collision load, and a member having high rigidity and a high crashworthiness load is used. A member having a role of absorbing energy by deformation of the member itself is disposed around the battery case. In particular, in a case of side collision (side impact), the side sill absorbs energy of the collision load from the side of the vehicle body, and the remaining load is supported by a floor cross member or a battery case side member. At this time, when a deformation amount required for the energy absorption of the side sill is small, an energy absorbing portion can be reduced, and a volume of the battery module can be expanded instead, which leads to an increase in cruising distance. From the above, a lightweight side sill structure having an excellent energy absorption property is required.

Conventionally, for example, the following technique is disclosed regarding a side sill structure and a vehicle body lower structure including the side sill structure. Patent Literature 1 discloses a side member structure of a vehicle body including a cylindrical body extending in a vehicle body front-rear direction and an impact absorption member disposed inside the cylindrical body, the side member structure having the following structure and function. The impact absorption member includes a web that extends in the vehicle body front-rear direction and is flat in a vehicle width direction, a vehicle outer flange that is joined to a vehicle outer end portion of the web and extends in the vehicle body front-rear direction, and a vehicle inner flange that is joined to a vehicle inner end portion of the web and extends in the vehicle body front-rear direction. The vehicle outer flange and the vehicle inner flange are disposed so as to sandwich the web from above and below, and have ribs extending in the vehicle body front-rear direction, thereby suppressing local deformation while maintaining the impact absorption capability.

Patent Literature 2 discloses a vehicle body lower structure including a side sill extending in a vehicle front-rear direction and a stiffener extending along an extending direction of the side sill, the vehicle body lower structure having the following structure and function. The stiffener includes an outer stiffener having a hat-shaped cross section bulging outward in a width direction of a vehicle body and an inner stiffener having a hat-shaped cross section bulging inward in the width direction of the vehicle body. A first side surface of the stiffener formed on the inner stiffener side is shifted upward relative to a second side surface of the stiffener formed on the outer stiffener side. Beads extending along a vehicle body width direction are formed on at least one of upper and lower surfaces of the outer stiffener. With the above structure, a collision load input to the side sill is efficiently transmitted to the inside in the width direction of the vehicle body.

Patent Literature 3 discloses a vehicle body lower structure having the following structure and function. The vehicle body lower structure includes a bulkhead that is disposed at a position in a vehicle body front-rear direction sandwiching a fixing point between a side sill extending along the vehicle body front-rear direction and a battery pack inside the side sill and reinforces a cross section of the side sill from the inside. With this structure, when the collision load is input from the side of the vehicle body, energy of the collision load can be sufficiently absorbed by a battery cross member, and a battery cell in the battery pack can be stably protected by the battery cross member.

Patent Literature 4 discloses a vehicle body lower structure including a side sill, a first energy-absorbing member, and a second energy-absorbing member, the vehicle body lower structure having the following structure. The first energy-absorbing member is provided on an inner panel side in a hollow cross section of the side sill, and the second energy-absorbing member is provided on an outer panel side in the hollow cross section of the side sill so as to face the first energy-absorbing member. A strength of the first energy-absorbing member is set to be larger than that of the second energy-absorbing member. As a result, a vehicle body lower structure that can be mass-produced at low cost using a normal steel sheet was obtained.

Citation List

Patent Literature

Patent Literature 1: WO 2021/157651 A
Patent Literature 2: JP 2018-131133 A
Patent Literature 3: JP 2019-202743 A
Patent Literature 4: WO 2020/070935 A

Summary

Technical Problem

In the technique of Patent Literature 1, since a reinforcing member in the side sill has a constant cross section in the vehicle front-rear direction, collision energy can be absorbed regardless of a collision position, but since the reinforcing member is also present in a portion that does not need to be reinforced, the weight may be excessive. Further, as in the technique of Patent Literature 2, in the side sill having a partition member, a sufficient collision energy absorption property cannot be obtained simply by disposing stiffeners having a hat-shaped cross section on both sides (inside and outside of the partition member) of the partition member. Even when the beads extending along the vehicle body width direction are formed on at least one of the upper and lower surfaces of the stiffener, the obtained collision energy absorption property is not sufficient.

In addition, even when the bulkhead is disposed in the closed sectional space between the side sill and the partition member in the side sill having the partition member as in the technique of Patent Literature 3, the bulkhead is brought into line contact through the partition member at the time of collision, so that the efficiency of load transmission is not sufficient and the obtained collision energy absorption property is not sufficient. Furthermore, as in the technique of Patent Literature 4, even in a case where a hat-shaped cross sectional member is disposed as the first energy-absorbing member on the inner panel side of the side sill, and the bulkhead is disposed as the second energy-absorbing member on the outer panel side so as to face the first energy-absorbing member, when buckling of each energy-absorbing member occurs at the time of collision, cross-section collapsing of the side sill in a vehicle height direction occurs, and a sufficient collision energy absorption property is not obtained.

The present invention has been made to solve the above problems, and an object thereof is to provide a side sill structure of an automobile capable of obtaining a high collision energy absorption property with a small collision deformation amount while suppressing an increase in weight due to a structural member. Another object of the present invention is to provide a vehicle body lower structure including the side sill structure having such excellent crash worthiness.

Solution to Problem

As a result of extensive studies to solve the above problems, the present inventors have found that it is effective to provide an impact absorption structural portion including a specific structural member in the closed sectional space by using a vertical partition member that vertically passes through the closed sectional space in the side sill. Specifically, it has been found that the above problems can be solved by providing an impact absorption structural portion including a horizontal partition member with a bead that is provided to traverse the closed sectional space on the vehicle body inner side and the outer side partitioned by the vertical partition member in the vehicle width direction, and a bulkhead that is provided along the vehicle width direction in the closed sectional space above each horizontal partition member, with the horizontal partition member and the bulkhead on the vehicle body inner side and the outer side disposed to face each other with the vertical partition member sandwiched therebetween. Furthermore, it has been found that higher collision energy absorption property can be obtained by optimizing the configuration and arrangement of the horizontal partition member and the bulkhead constituting the impact absorption structural portion, and the joining mode with other members. The present invention has been made based on these findings, and has the following gist.

To solve the problem and achieve the object, a side sill structure of an automobile, according to the present invention, includes: a side sill (1) including a side sill inner (1a) on a vehicle inner side and a side sill outer (1b) on a vehicle outer side, and having a closed sectional space (3) formed inside; a vertical partition member (2) interposed between the side sill inner (1a) and the side sill outer (1b) of the side sill (1), the closed sectional space (3) being partitioned by the vertical partition member (2) into a closed sectional space (3a) on the vehicle inner side and a closed sectional space (3b) on the vehicle outer side; and an impact absorption structural portion (4) in the closed sectional space (3), wherein the impact absorption structural portion (4) includes a horizontal partition member (5) that traverses the closed sectional space (3a) in a vehicle width direction and a horizontal partition member (5) that traverses the closed sectional space (3b) in the vehicle width direction, the horizontal partition members being configured to vertically partition the closed sectional space, and a bulkhead (6) provided along the vehicle width direction in an upper space (30a) and a bulkhead (6) provided along the vehicle width direction in an upper space (30b), among spaces vertically partitioned by the horizontal partition members (5), wherein a plurality of the bulkheads (6) are provided in the upper space (30a) and a plurality of the bulk heads (6) are provided in the upper space (30b), at intervals in a vehicle longitudinal direction so as to partition the upper space (30a) and the upper space (30b) into a plurality of spaces in the vehicle longitudinal direction, each of the horizontal partition members (5) has a bead (7) formed at a position between the bulkheads (6) along the vehicle width direction, wherein a plurality of the beads (7) are provided at intervals in the vehicle longitudinal direction, and the horizontal partition member (5) and the bulkheads (6) in the closed sectional space (3a) on the vehicle inner side and the horizontal partition member (5) and the bulkheads (6) in the closed sectional space (3b) on the vehicle outer side are provided to face each other in the vehicle width direction with the vertical partition member (2) sandwiched therebetween.

Moreover, the horizontal partition member (5) in the closed sectional space (3a) on the vehicle inner side may be joined to the side sill inner (1a) and the vertical partition member (2), and the horizontal partition member (5) in the closed sectional space (3b) on the vehicle outer side may be joined to the side sill outer (1b) and the vertical partition member (2).

Moreover, the horizontal partition member (5) in the closed sectional space (3a) on the vehicle inner side may have a flange portion (50x) on one end side in the vehicle width direction, and may have a flange portion (50y) that is connected upward on the other end side and extends to an upper end portion of the side sill (1) along the vertical partition member (2), the flange portion (50x) on one end side in the vehicle width direction may be joined to an inner surface of the side sill inner (1a), and an upper end portion of the flange portion (50y) on the other end side may be joined to the side sill inner (1a) and the vertical partition member (2) in a state of being sandwiched between an upper end portion of the side sill inner (1a) and an upper end portion of the vertical partition member (2), and the horizontal partition member (5) in the closed sectional space (3b) on the vehicle outer side may have a flange portion (51x) on one end side in the vehicle width direction, and may have a flange portion (51y) that is connected upward on the other end side and extends to the upper end portion of the side sill (1) along the vertical partition member (2), the flange portion (51x) on one end side in the vehicle width direction may be joined to an inner surface of the side sill outer (1b), and an upper end portion of the flange portion (51y) on the other end side may be joined to the side sill outer (1b) and the vertical partition member (2) in a state of being sandwiched between an upper end portion of the side sill outer (1b) and an upper end portion of the vertical partition member (2).

Moreover, the horizontal partition member (5) in the closed sectional space (3a) on the vehicle inner side may have a flange portion (52x) on one end side in the vehicle width direction, and may have a flange portion (52y) that is connected downward on the other end side and extends to a lower end portion of the side sill (1) along the vertical partition member (2), the flange portion (52x) on one end side in the vehicle width direction may be joined to an inner surface of the side sill inner (1a), and a lower end portion of the flange portion (52y) on the other end side may be joined to the side sill inner (1a) and the vertical partition member (2) in a state of being sandwiched between a lower end portion of the side sill inner (1a) and a lower end portion of the vertical partition member (2), and the horizontal partition member (5) in the closed sectional space (3b) on the vehicle outer side may have a flange portion (53x) on one end side in the vehicle width direction, and may have a flange portion (53y) that is connected downward on the other end side and extends to the lower end portion of the side sill (1) along the vertical partition member (2), the flange portion (53x) on one end side in the vehicle width direction may be joined to an inner surface of the side sill outer (1b), and a lower end portion of the flange portion (53y) on the other end side may be joined to the side sill outer (1b) and the vertical partition member (2) in a state of being sandwiched between a lower end portion of the side sill outer (1b) and a lower end portion of the vertical partition member (2).

Moreover, the horizontal partition member (5) in the closed sectional space (3a) on the vehicle inner side may have a flange portion (54) on each of one end side and the other end side in the vehicle width direction, the flange portion (54) on one end side in the vehicle width direction may be joined to an inner surface of the side sill inner (1a), and the flange portion (54) on the other end side may be joined to a surface of the vertical partition member (2) on the vehicle inner side, and the horizontal partition member (5) in the closed sectional space (3b) on the vehicle outer side may have a flange portion (55) on each of one end side and the other end side in the vehicle width direction, the flange portion (55) on one end side in the vehicle width direction may be joined to an inner surface of the side sill outer (1b), and the flange portion (55) on the other end side may be joined to a surface of the vertical partition member (2) on the vehicle outer side.

Moreover, each of the bulkheads (6) in the upper space (30a) on a vehicle body inner side may be joined to at least: an upper horizontal surface portion (101A) of the side sill inner (1a); and the horizontal partition member (5), and each of the bulkheads (6) in the upper space (30b) on a vehicle body outer side may be joined to at least: a vertical surface portion (100) and the upper horizontal surface portion (101A) of the side sill outer (1b); and the horizontal partition member (5).

Moreover, the bulkheads (6) may include a bulkhead ($6_x$) provided in a region within a width of a floor cross member in a vehicle front-rear direction and a bulkhead ($6_y$) provided in a region outside the width of the floor cross member, and in the vehicle front-rear direction, the bulkhead ($6_x$) may be provided at two or more locations in the region within the width of the floor cross member, and the bulkhead ($6_y$) may be provided at one or more locations in the region outside the width of the floor cross member, and when an interval between two adjacent bulkheads ($6_x$) is represented by w1, and an interval between the bulkhead ($6_x$) and the bulkhead ($6_y$) adjacent thereto is represented by w2, w1 < w2 may be satisfied.

Moreover, at least some bulkheads ($6_y$) may consist of a bulkhead set including two or more bulkheads provided adjacent to each other.

Moreover, each of the bulkheads (6) may be joined to the horizontal partition member (5) via a flange portion (60), and when a distance (provided that, it is a distance between edge portions of two beads (7)) between two adjacent beads (7) in the vehicle longitudinal direction is represented by $W_H$, and a width of the flange portion (60) of the bulkhead (6) is represented by $W_{BF}$, $W_{BF} \leq W_H \leq 127$ mm may be satisfied.

Moreover, a metal sheet constituting the impact absorption structural portion (4) may have a yield strength equal to or less than a yield strength of a metal sheet constituting a floor cross member.

Moreover, a metal sheet constituting the impact absorption structural portion (4) may have a tensile strength of 780 MPa class or more, or a Vickers hardness (HV) of 250 or more at a position of 1/4 of a sheet thickness of the metal sheet.

Moreover, a metal sheet constituting the impact absorption structural portion (4) may be a steel sheet containing: by mass%, C: 0.030% or more and 0.250% or less, Si: 0.01% or more and 2.50% or less, Mn: 1.00% or more and less than 3.50%, P: 0.001% or more and 0.100% or less, S: 0.0200% or less, and Al: 0.010% or more and 2.000% or less.

Moreover, a metal sheet constituting the impact absorption structural portion (4) may have a steel structure including, at a position of 1/4 of a sheet thickness of the metal sheet, ferrite in an area ratio of 0% or more and 65% or less, martensite and tempered martensite in a total area ratio of 30% or more and 100% or less, and residual austenite in an area ratio of 0% or more and 15% or less.

Moreover, a metal sheet constituting the impact absorption structural portion (4) may have an ultimate deformability of 0.55 or more in a tensile test.

Moreover, a critical curvature radius R (mm) at which a crack does not occur when a 90° V-bending test is performed and a sheet thickness t (mm) of a metal sheet constituting the impact absorption structural portion (4) may satisfy $R/t \leq 7.0$.

Moreover, a vehicle body lower structure of an automobile, according to a first mode of the present invention, includes: side sills (1) disposed on both sides of a vehicle body lower portion along a vehicle longitudinal direction; a floor cross member (10) disposed on a floor panel (11) along a vehicle width direction and connecting both side sills (1); and a battery case (12) disposed between both side sills (1) on a lower side of the floor cross member (10), wherein the vehicle body lower structure includes the side sill structure of an automobile according to the present invention, a battery case side member (120) of the battery case (12) and the side sill (1) are adjacent to each other in the vehicle width direction and disposed at positions where at least parts thereof overlap each other when viewed from a side of the vehicle, and a horizontal partition member (5) is provided such that the battery case side member (120) is positioned on a horizontal extension thereof.

Moreover, a crashworthiness load of a member constituting an impact absorption structural portion (4) may be equal to or less than a crashworthiness load of the floor cross member (10) and the battery case side member (120).

Moreover, a vehicle body lower structure of an automobile, according to a second mode of the present invention, includes: side sills (1) disposed on both sides of a vehicle body lower portion along a vehicle longitudinal direction; and a floor cross member (10) disposed on a floor panel (11) along a vehicle width direction and connecting both side sills (1), wherein the vehicle body lower structure includes the side sill structure of an automobile according to the present invention, and a horizontal partition member (5) is provided such that the floor cross member (10) is positioned on a horizontal extension thereof.

Moreover, a crashworthiness load of a member constituting an impact absorption structural portion (4) may be equal to or less than a crashworthiness load of the floor cross member (10).

Advantageous Effects of Invention

In the side sill structure of an automobile and the vehicle body lower structure including the side sill structure of the present invention, since a vertical partition member 2 vertically passing through a closed sectional space 3 in a side sill 1 is used and an impact absorption structural portion 4 including a specific structural member is provided in the closed sectional space 3, a high collision energy absorption property can be obtained with a small collision deformation amount. For this reason, when the present invention is applied to an automobile including a battery module between both side sills like a battery powered vehicle, there is an advantage that a space required for energy absorption can be reduced and a volume of the battery module can be expanded. In addition, since the impact absorption structural portion 4 can obtain high bending stiffness with the minimum necessary components, an increase in weight of the vehicle body due to the components can also be suppressed.

Brief Description of Drawings

FIG. 1 schematically illustrates an embodiment of a side sill structure of an automobile of the present invention and a vehicle body lower structure including the side sill structure, and is a longitudinal cross-sectional view in a vehicle width direction of the vehicle body lower structure including the side sill (one structural portion of structural portions on both sides of a vehicle body lower portion).

FIG. 2 is a cross-sectional view taken along line II-II in FIG. 1.

FIG. 3 is a cross-sectional view of a horizontal partition member taken along line III-III in FIG. 2.

FIG. 4 is a component development view of the side sill structure according to the embodiment of FIG. 1.

FIG. 5 is a view for explaining a width $W_F$ of a floor cross member in the vehicle body lower structure of an automobile of the present invention.

FIG. 6 is an explanatory view illustrating other arrangement mode examples of bulkheads in the side sill structure of an automobile of the present invention.

FIG. 7 is an explanatory view illustrating other arrangement mode examples of the bulkheads in the side sill structure of an automobile of the present invention.

FIG. 8 schematically illustrates another embodiment of the side sill structure of an automobile of the present invention and the vehicle body lower structure including the side sill structure, and is a longitudinal cross-sectional view in the vehicle width direction of the vehicle body lower structure including the side sill (one structural portion of the structural portions on both sides of the vehicle body lower portion).

FIG. 9 schematically illustrates another embodiment of the side sill structure of an automobile of the present invention and the vehicle body lower structure including the side sill structure, and is a longitudinal cross-sectional view in the vehicle width direction of the vehicle body lower structure including the side sill (one structural portion of the structural portions on both sides of the vehicle body lower portion).

FIG. 10 schematically illustrates another embodiment of the side sill structure of an automobile of the present invention and the vehicle body lower structure including the side sill structure, and is a longitudinal cross-sectional view in the vehicle width direction of the vehicle body lower structure including the side sill (one structural portion of the structural portions on both sides of the vehicle body lower portion).

FIG. 11 is a view for explaining test conditions of a crash test in examples.

FIG. 12-1 is an explanatory view illustrating a test body (side sill structure) of Invention Example 1 and test conditions in the crash test of the examples.

FIG. 12-2 is an explanatory view illustrating a test body (side sill structure) of Invention Example 2 and test conditions in the crash test of the examples.

FIG. 12-3 is an explanatory view illustrating a test body (side sill structure) of Comparative Example 1 and test conditions in the crash test of the examples.

FIG. 12-4 is an explanatory view illustrating a test body (side sill structure) of Comparative Example 2 and test conditions in the crash test of the examples.

FIG. 12-5 is an explanatory view illustrating a test body (side sill structure) of Comparative Example 3 and test conditions in the crash test of the examples.

FIG. 12-6 is an explanatory view illustrating a test body (side sill structure) of Comparative Example 4 and test conditions in the crash test of the examples.

FIG. 13-1 is a graph illustrating a relationship between an intrusion amount of an impact object (pole) and absorbed energy in the crash test of the examples (Invention Examples 1 and 2 and Comparative Example 1).

FIG. 13-2 is a graph illustrating a relationship between an intrusion amount of an impact object (pole) and absorbed energy in a crash test of the examples (Comparative Examples 2 to 4).

FIG. 14 is a graph illustrating absorbed energy at maximum intrusion of an impact object (pole) in the crash test of the examples (Invention Examples and Comparative Examples).

FIG. 15 is a graph illustrating a maximum intrusion amount of the impact object (pole) in the crash test of the examples (Invention Examples and Comparative Examples).

Description of Embodiments

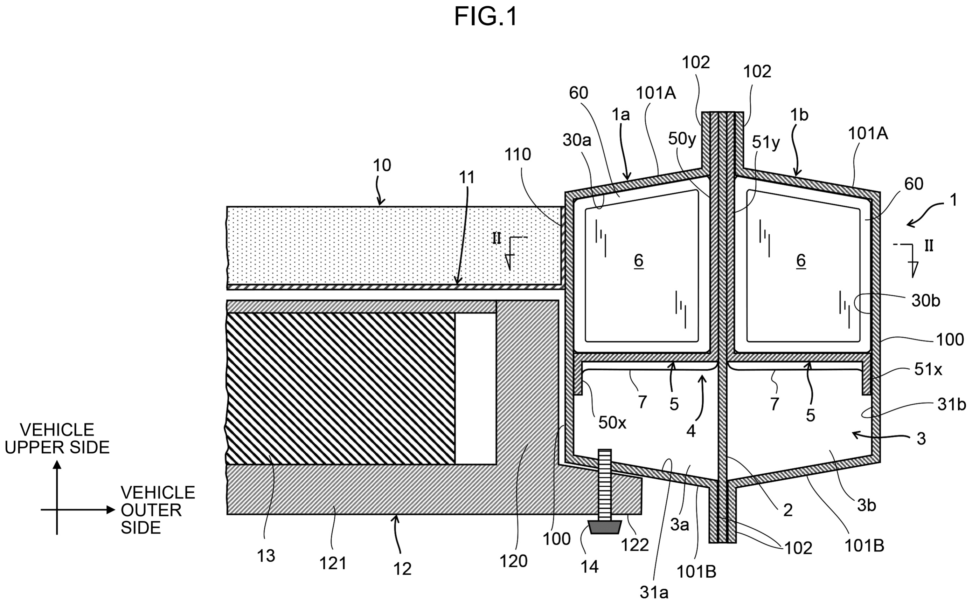

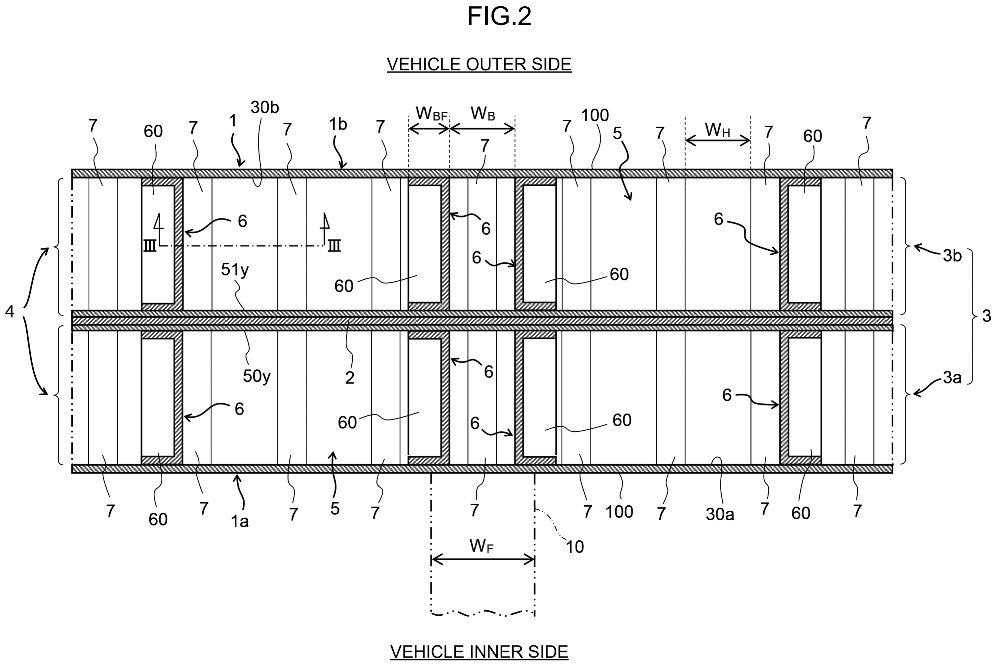

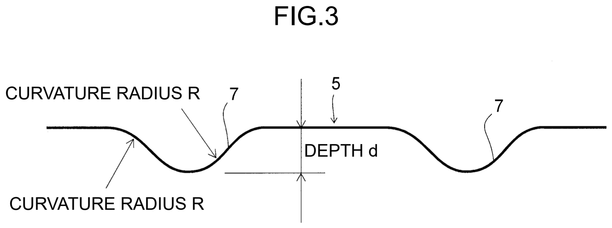

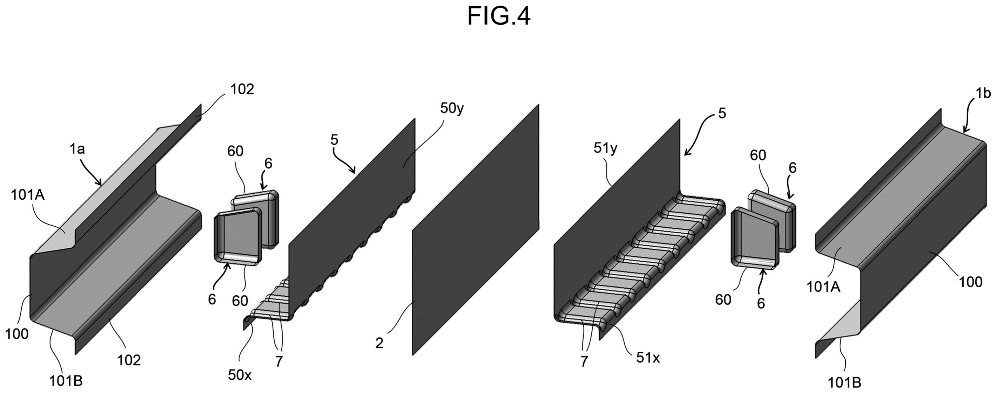

FIGS. 1 to 4 schematically illustrate an embodiment of a side sill structure of an automobile of the present invention and a vehicle body lower structure including the side sill structure. Among them, FIG. 1 is a longitudinal cross-sectional view in a vehicle width direction of the vehicle body lower structure (one structural portion of the structural portions on both sides of the vehicle body lower portion) including the side sill. FIG. 2 is a cross-sectional view taken along line II-II in FIG. 1, FIG. 3 is a cross-sectional view of a horizontal partition member taken along line III-III in FIG. 2, and FIG. 4 is a component development view of the side sill structure. The side sill is a frame structure member disposed on both sides of the vehicle body lower portion along a vehicle longitudinal direction. The side sill structure of an automobile of the present invention includes, as basic structural members, a side sill 1 including a side sill inner 1a on a vehicle inner side and a side sill outer 1b on a vehicle outer side, and a vertical partition member 2 interposed between the side sill inner 1a and the side sill outer 1b of the side sill 1. A closed sectional space 3 is formed inside the side sill 1, and the closed sectional space 3 is partitioned into a closed sectional space 3a on the vehicle inner side and a closed sectional space 3b on the vehicle outer side by the vertical partition member 2 that vertically passes through the closed sectional space. Although details will be described later, the side sill inner 1a and the side sill outer 1b constituting the side sill 1 each have a cross-sectional groove shape, and the side sill inner 1a and the side sill outer 1b are joined together with the vertical partition member 2 sandwiched therebetween, thereby forming the above-described side sill structure.

The side sill inner 1a and the side sill outer 1b constituting the side sill 1 are formed by molding a metal sheet. Each of the side sill inner 1a and the side sill outer 1b has a main body portion having a cross-sectional groove shape formed of a vertical surface portion 100, and horizontal surface portions 101A and 101B connected to upper and lower ends thereof. Flange portions 102 are connected to upper and lower ends (end portions of horizontal surface portions 101A and 101B) of the main body portion. The vertical surface portion 100 may not be vertical and may have an appropriate inclination or curved surface. In addition, the horizontal surface portions 101A and 101B may not be horizontal, and may have an appropriate inclination or curved surface as illustrated in FIG. 1. Although the vertical partition member 2 is also formed of a metal sheet, the vertical partition member 2 may not be a complete flat sheet but may be formed by bend forming a flat sheet.

The side sill inner 1a and the side sill outer 1b are joined (normally joined by spot welding) by overlapping the flange portions 102, thereby forming the side sill 1 in which the inside becomes the closed sectional space 3. At this time, since the vertical partition member 2 is interposed (sandwiched) between the side sill inner 1a and the side sill outer 1b, the flange portions 102 of the side sill inner 1a and the side sill outer 1b are joined via the upper and lower end portions of the vertical partition member 2 sandwiched therebetween. As a result, the vertical partition member 2 vertically passes through the closed sectional space 3 in the side sill 1, and the closed sectional space 3 is partitioned into two closed sectional spaces 3a and 3b in the vehicle width direction by the vertical partition member 2. In the present embodiment, as will be described later, an upper end portion of a flange portion 50y of a horizontal partition member 5 on the vehicle inner side is joined to the vertical partition member 2 and the side sill inner 1a in a state of being sandwiched between an upper end portion of the vertical partition member 2 and the upper flange portion 102 of the side sill inner 1a. Similarly, an upper end portion of a flange portion 51y of the horizontal partition member 5 on the vehicle outer side is joined to the vertical partition member 2 and the side sill outer 1b in a state of being sandwiched between the upper end portion of the vertical partition member 2 and the flange portion 102 of the side sill outer 1b. Therefore, the upper flange portions 102 of the side sill inner 1a and the side sill outer 1b are joined to the upper end portion of the vertical partition member 2 sandwiched therebetween via the upper end portions of the flange portions 50y and 51y of the horizontal partition member 5. The vertical partition member 2 is sandwiched between the side sill inner 1a and the side sill outer 1b, and upper and lower end portions thereof are joined to upper and lower ends of a side sill main body (in the present embodiment, joined in a state of being sandwiched between the flange portions 102 of the side sill inner 1a and the side sill outer 1b). For this reason, a high crashworthiness load to prevent the cross section of the side sill 1 from opening and collapsing in a vehicle height direction at the time of side collision (side impact) (suppression of cross-section collapsing) is obtained, which contributes to enhancing the crash worthiness.

The side sill structure of an automobile of the present invention includes an impact absorption structural portion 4 formed of a specific structural member in the closed sectional space 3 of the side sill 1. The impact absorption structural portion 4 includes the horizontal partition member 5 that traverses the closed sectional spaces 3a and 3b in the vehicle width direction and vertically partitions the closed sectional spaces, and the bulkhead 6 provided along the vehicle width direction in upper spaces 30a and 30b among the spaces vertically partitioned by the horizontal partition member 5. A plurality of the bulkheads 6 are provided in the upper spaces 30a and 30b at intervals in the vehicle longitudinal direction so as to partition the upper spaces 30a and 30b into a plurality of spaces in the vehicle longitudinal direction. In the horizontal partition member 5, a bead 7 is formed at a position between the bulkheads 6 along the vehicle width direction, and a plurality of the beads 7 are provided at intervals in the vehicle longitudinal direction. The horizontal partition member 5 and the bulkhead 6 in the closed sectional space 3a on the vehicle inner side and the horizontal partition member 5 and the bulkhead 6 in the closed sectional space 3b on the vehicle outer side are provided to face each other in the vehicle width direction with the vertical partition member 2 sandwiched therebetween. The impact absorption structural portion 4 is provided at least in a portion along the battery case (battery case side member) of the side sill 1 in the vehicle longitudinal direction. In such a side sill structure including the impact absorption structural portion 4, effects of (i) to (vii) described later are obtained, and a high collision energy absorption property is obtained by combining these effects. In particular, in this structure, since desired crash worthiness can be obtained even when the number of bulkheads 6 to be installed is reduced, there is an advantage that a high collision energy absorption property can be obtained with a small collision deformation amount while suppressing an increase in weight by the structural member.

Hereinafter, details of the impact absorption structural portion 4 according to this embodiment will be described. The horizontal partition member 5 is provided along the vehicle body longitudinal direction so as to horizontally traverse the closed sectional spaces 3a and 3b, and partitions the closed sectional spaces 3a and 3b into upper spaces 30a and 30b and lower spaces 31a and 31b. The horizontal partition member 5 is formed by molding a metal sheet. The horizontal partition member 5 in the closed sectional space 3a on the vehicle inner side is joined to the side sill inner 1a and the vertical partition member 2, and the horizontal partition member 5 in the closed sectional space 3b on the vehicle outer side is joined to the side sill outer 1b and the vertical partition member 2. One of the functions of the horizontal partition member 5 is to traverse the inside of the side sill 1 and secure a load transfer path from an initial stage of collision to a floor cross member or the battery case, and thus the horizontal partition member 5 is preferably joined to the side sill 1 and the vertical partition member 2 as described above.

The mounting/joining structure of the horizontal partition member 5 to the side sill 1 and the vertical partition member 2 is not particularly limited. In the present embodiment, each horizontal partition member 5 has flange portions for mounting (joining) on one end side and the other end side in the vehicle width direction, and is mounted and joined to the side sill 1 and the vertical partition member 2 via the flange portions. In the present embodiment, the horizontal partition member 5 in the closed sectional space 3a on the vehicle inner side has a flange portion 50x connected downward (toward the downward direction) on one end side in the vehicle width direction and a flange portion 50y connected upward (toward the upward direction) on the other end side. The flange portion 50y extends to the upper end portion of the side sill 1 along the vertical partition member 2. The flange portion 50x on one end side is joined to an inner surface of the side sill inner 1a, and an upper end portion of the flange portion 50y on the other end side is joined to the side sill inner 1a and the vertical partition member 2 in a state of being sandwiched between an upper end portion (flange portion 102) of the side sill inner 1a and an upper end portion of the vertical partition member 2.

In addition, the horizontal partition member 5 in the closed sectional space 3b on the vehicle outer side has a flange portion 51x connected downward (toward the downward direction) on one end side in the vehicle width direction and a flange portion 51y connected upward (toward the upward direction) on the other end side. The flange portion 51y extends to the upper end portion of the side sill 1 along the vertical partition member 2. The flange portion 51x on one end side is joined to an inner surface of the side sill outer 1b, and an upper end portion of the flange portion 51y on the other end side is joined to the side sill outer 1b and the vertical partition member 2 in a state of being sandwiched between an upper end portion (flange portion 102) of the side sill outer 1b and the upper end portion of the vertical partition member 2. The flange portions 50x, 50y, 51x, and 51y (in particular, the flange portions 50y and 51y having a large size) may be provided with through-holes for weight reduction. For the same reason, the flange portions 50x, 50y, 51x, and 51y may be formed (for example, intermittently formed at predetermined intervals) only in a part of the horizontal partition member 5 in the longitudinal direction. The above configuration is the same for the flange portion of the horizontal partition member 5 of another embodiment described later.

When the horizontal partition member 5 has such a mounting/joining structure via the flange portions 50x, 50y, 51x, and 51y, the side sill structure can be easily assembled as follows. The horizontal partition member 5 on the vehicle inner side is joined and fixed to the side sill inner 1a by joining the flange portion 50x to the vertical surface portion 100 of the side sill inner 1a and joining the upper end portion of the flange portion 50y to the upper flange portion 102 of the side sill inner 1a. The horizontal partition member 5 on the vehicle outer side is joined and fixed to the side sill outer 1b by joining the flange portion 51x to the vertical surface portion 100 of the side sill outer 1b and joining the upper end portion of the flange portion 51y to the upper flange portion 102 of the side sill outer 1b. Then, in a state where the vertical partition member 2 is sandwiched between the side sill inner 1a and the side sill outer 1b to which the horizontal partition member 5 is respectively joined and fixed, the three members are joined. As a joining mode in this case, for example, for the upper end side of the side sill 1, the flange portion 50y (the upper end portion of the flange portion 50y) of the horizontal partition member 5 on the vehicle inner side joined to the upper flange portion 102 of the side sill inner 1a, the flange portion 51y (the upper end portion of the flange portion 51y) of the horizontal partition member 5 on the vehicle outer side joined to the upper flange portion 102 of the side sill outer 1b, and the upper end portion of the vertical partition member 2 may be joined (spot welded). With respect to the lower end side of the side sill 1, the lower flange portion 102 of the side sill inner 1a, the lower flange portion 102 of the side sill outer 1b, and the lower end portion of the vertical partition member 2 may be joined (spot welded).

Each horizontal partition member 5 has a bead 7 formed along the vehicle width direction, and a plurality of the beads 7 are provided at intervals in the vehicle longitudinal direction. The bead 7 enhances rigidity of the horizontal partition member 5 and enhances a collision energy absorption property by increasing a collision maximum load (crashworthiness load) generated at the initial stage of deformation at the time of side collision. In addition, by providing the plurality of beads 7 at intervals in the vehicle longitudinal direction, it is possible to obtain an effect of suppressing strain propagation of the horizontal partition member 5 at positions other than the side collision position and suppressing buckling of the horizontal partition member 5. The bead 7 is formed at a position where the bulkhead 6 is not provided in the vehicle longitudinal direction, that is, at a position between the bulkheads 6. The bead 7 of the present embodiment is formed by recessing a part of the sheet material constituting the horizontal partition member 5 downward in a groove shape, but conversely, may be formed by recessing a part of the sheet material constituting the horizontal partition member 5 upward in a groove shape.

The formation interval of the beads 7, the size of the beads 7, and the like are not particularly limited, and may be appropriately determined from the viewpoint of securing the rigidity of the horizontal partition member 5 while considering the workability, the arrangement of the bulkheads 6, and the like, but in general, it is preferable to provide the beads 7 under the following conditions. The beads 7 are not necessarily provided at equal intervals in the vehicle body longitudinal direction, but are normally provided at equal intervals. A formation interval of the beads 7 (see FIG. 2), that is, a distance $W_H$ (provided that, it is a distance between edge portions of two beads 7) between two adjacent beads 7 in the vehicle body longitudinal direction is preferably 127 mm or less. Since a radius of a pole, which is an impact object in a side impact test (a side pole impact test as defined in Euro NCAP), is 127 mm, when an inter-bead distance $W_H \leq 127$ mm, one or more beads 7 always exist within the pole radius range (127 mm), and the rigidity improvement effect by the beads 7 is always appropriately obtained. In addition, when the inter-bead distance $W_H$ is 63 mm or less, which is almost a half of 127 mm, two or more beads 7 always exist within the pole radius range (127 mm), and the rigidity improvement effect by the beads 7 is further enhanced. On the other hand, from the viewpoint of securing rigidity of the horizontal partition member 5, there is no particular lower limit on the inter-bead distance $W_H$, but as will be described later, when the width of a flange portion 60 of the bulkhead 6 is represented by $W_{BF}$, it is preferable that the inter-bead distance $W_H$ satisfies $W_{BF} \leq W_H$. Therefore, in general, the inter-bead distance $W_H$ is preferably 30 mm or more. A depth d (see FIG. 3) of the bead 7 is preferably about 3 to 7 mm, and a curvature radius R (see FIG. 3) of a bead cross section is preferably about 6 to 10 mm. This makes it possible to improve the rigidity by the bead while securing the workability at the time of bead formation.

The bulkhead 6 is formed by molding a metal sheet. The plurality of bulkheads 6 are provided in the upper spaces 30a and 30b at intervals in the vehicle longitudinal direction so as to partition the upper spaces 30a and 30b on the vehicle body inner side and the outer side into a plurality of spaces in the vehicle longitudinal direction. Each bulkhead 6 is disposed along the vehicle width direction such that a sheet surface of each bulkhead 6 is perpendicular to the horizontal partition member 5. The bulkhead 6 is preferably provided so as to partition the entire cross sections of the upper spaces 30a and 30b in the vehicle width direction. It is preferable that each bulkhead 6 is joined to each member surrounding the upper spaces 30a and 30b at a plurality of locations on the outer peripheral portion thereof, but in order to obtain a minimum collision energy absorption property, it is preferable that each bulkhead 6 is joined to at least the surrounding members as follows. That is, at least the upper portion and the lower portion of the bulkhead 6 on the vehicle body inner side are preferably joined to the upper horizontal surface portion 101A of the side sill inner 1a and the horizontal partition member 5, respectively, in order to form a load transfer path and not to cause positional displacement of the bulkhead at the time of side collision. However, a particularly preferable mode is that both side portions of the bulkhead 6 are also joined to the vertical surface portion 100 of the side sill inner 1a and the flange portion 50y of the horizontal partition member 5, that is, the upper portion, the lower portion, and both side portions of the bulkhead 6 are joined to the surrounding members. At least the upper portion and the lower portion of the bulkhead 6 on the vehicle body outer side are preferably joined to the upper horizontal surface portion 101A of the side sill outer 1b and the horizontal partition member 5, respectively, in order not to cause positional displacement at the time of side collision. Furthermore, in the bulkhead 6 on the vehicle body outer side, since a portion in contact with the vertical surface portion 100 of the side sill outer 1b is greatly deformed at the time of side collision, the side portion is preferably joined to the vertical surface portion 100 of the side sill outer 1b. Further, a particularly preferable mode is that the other side portion of the bulkhead 6 is also joined to the flange portion 51y of the horizontal partition member 5, that is, the upper portion, the lower portion, and both side portions of the bulkhead 6 are joined to the surrounding members. Normally, the bulkhead 6 and the surrounding members are joined by spot welding.

The bulkhead 6 of the present embodiment has the flange portion 60 at an outer peripheral edge of the main body portion (partition wall portion), and is joined (normally joined by spot welding) to the surrounding members via the flange portion 60 as described above. The flange portion 60 may be formed (for example, intermittently formed at predetermined intervals) only on a part of the outer peripheral edge of the main body portion (partition wall portion). The bulkheads 6 may be provided in the upper spaces 30a and 30b of the side sill 1 at equal intervals in the vehicle longitudinal direction, or may be provided such that wide intervals and narrow intervals alternate, for example. Furthermore, as will be described later, different intervals may be provided for each region in the vehicle front-rear direction. As described above, the bulkhead 6 is joined to another member such as the horizontal partition member 5 via the flange portion 60, but the flange width $W_{BF}$ and the inter-bead distance $W_H$ preferably satisfy $W_{BF} \leq W_H$. This is because, as illustrated in FIG. 2, the bulkhead 6 needs to be disposed on the horizontal partition member surface on which the bead 7 is not formed.

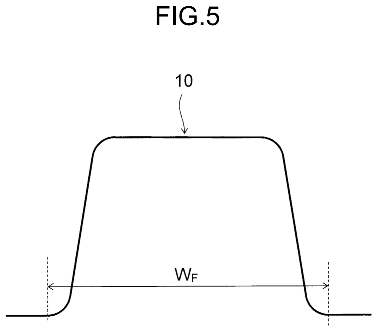

When the bulkheads 6 are provided at intervals in the vehicle longitudinal direction, the bulkheads 6 can be provided at two or more locations in a region within the width $W_F$ of a floor cross member 10 as illustrated in FIG. 2 in order to enhance the crash worthiness of the impact absorption structural portion 4. In this manner, by providing the bulkheads 6 at two or more locations in the region within the width $W_F$ of the floor cross member 10 to reduce the interval between the bulkheads 6, the crash worthiness can be enhanced. The width $W_F$ of the floor cross member 10 may be a width of a portion between both side walls in the floor cross member width direction. FIG. 5 schematically illustrates a cross section of a general floor cross member 10 in the width direction. In the case of the floor cross member 10 having flange portions at both edge portions as illustrated in FIG. 5, the width $W_F$ of the floor cross member 10 may be a width of a portion excluding the flange portions at both edge portions (a width of a main portion functioning as a frame member) in the floor cross member width direction, that is, a width between locations where R portions (rounded parts) of the flange portions start.

In a case where the bulkheads 6 are disposed at a plurality of locations within the width $W_F$ of the floor cross member 10, when an interval $W_B$ between two adjacent bulkheads 6 (a distance between the main body portions of the bulkheads 6 illustrated in FIG. 2) is excessively small, the effect of enhancing the crash worthiness within the width $W_F$ of the floor cross member 10 deteriorates, or the number of the bulkheads 6 to be installed is unnecessarily increased, which is not preferable. Therefore, it is preferable that the bulkheads 6 disposed at two or more locations in the region within the width $W_F$ of the floor cross member 10 are disposed such that a ratio $W_B/W_F$ of the interval $W_B$ between the bulkheads 6 to the width $W_F$ of the floor cross member 10 is 0.5 or more and 1.0 or less. The disposition of the bulkhead 6 within the width $W_F$ of the floor cross member 10 means that the main body portion (partition wall portion) of the bulkhead 6 is positioned within the width $W_F$ of the floor cross member 10 in the vehicle longitudinal direction.

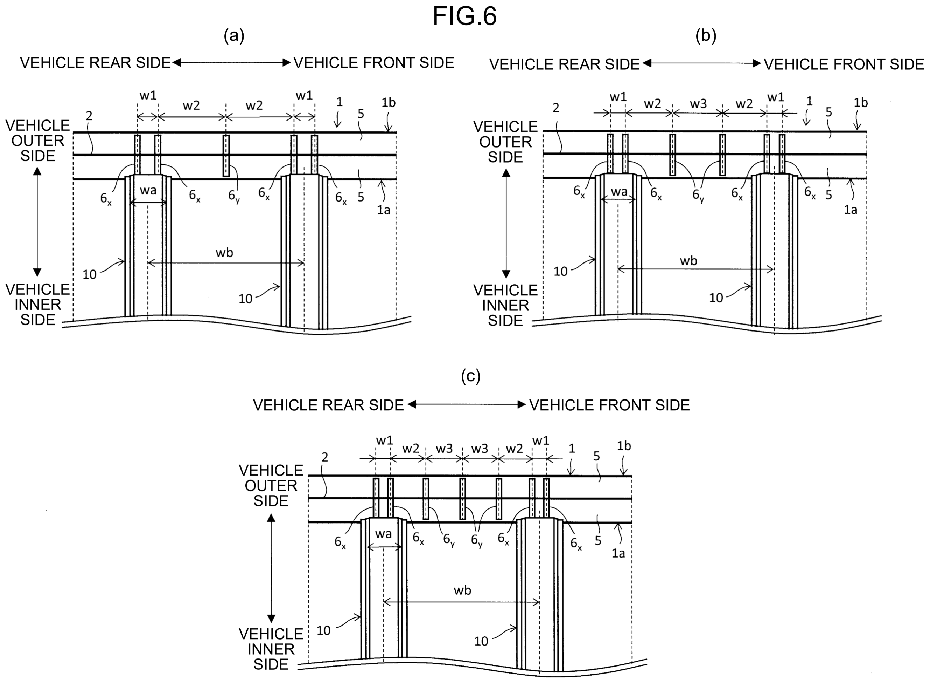

In the impact absorption structural portion 4, the horizontal partition member 5 is a member extending in the vehicle longitudinal direction, and the plurality of beads 7 are provided on the horizontal partition member surface at intervals in the vehicle longitudinal direction. Therefore, the impact absorption structural portion 4 functions as an impact absorption member regardless of the side collision position. Therefore, even when the number of bulkheads 6 to be installed is reduced, a sufficient collision energy absorption property can be obtained by the impact absorption structural portion 4. For example, as illustrated in FIG. 2, in a case where the bulkheads 6 are provided at two or more locations in the region within the width $W_F$ of the floor cross member 10, when the bulkheads 6 are provided at one or more locations in the region outside the width of the floor cross member 10 (the position of the horizontal partition member surface where the bead 7 is not formed), the interval between the bulkhead 6 and the bulkhead 6 within the width $W_F$ of the floor cross member 10 can be disposed to be wider than the interval between the bulkheads 6 within the width $W_F$ of the floor cross member 10 (see, for example, the embodiment of FIG. 6 described later). As a result, it is possible to reduce the number of bulkheads 6 to be installed to reduce the weight while enhancing the crash worthiness of the region outside the width of the floor cross member 10.

The horizontal partition member 5 and the bulkhead 6 in the closed sectional space 3a on the vehicle inner side and the horizontal partition member 5 and the bulkhead 6 in the closed sectional space 3b on the vehicle outer side are provided to face each other in the vehicle width direction (that is, at the same position in the vehicle longitudinal direction) with the vertical partition member 2 sandwiched therebetween. As a result, the horizontal partition members 5 and the bulkheads 6 on the vehicle inner side and the outer side function integrally with the vertical partition member 2 sandwiched therebetween, and a high collision energy absorption property can be obtained as described later. On the other hand, since the vertical partition member 2 has a structure in which the impact absorption structural portion 4 is divided between the vehicle body inner side and the outer side, the wavelength of buckling of the impact absorption structural portion 4 (horizontal partition member 5 and bulkhead 6) in the vehicle width direction is shortened, and the buckling strength is improved, which is also a factor of enhancing the collision energy absorption property.

Hereinafter, a preferable material of the metal sheet (which is normally a "steel sheet") constituting the impact absorption structural portion 4 (horizontal partition member 5 and bulkhead 6) will be described. The metal sheet constituting the impact absorption structural portion 4 (horizontal partition member 5 and bulkhead 6) preferably has a tensile strength of 780 MPa class or more. As for the crash worthiness of the impact absorption structural portion 4, as the load (hereinafter, referred to as "crashworthiness load") at the time of turning to plastic deformation through elastic deformation immediately after the start of deformation of the impact absorption structural portion 4 at the time of side collision is higher, deformation at the time of collision is less likely to occur, and the crash worthiness is better. The crashworthiness load increases as the yield strength of the metal sheet used for the impact absorption structural portion 4 increases, and thus it is preferable to use a metal sheet having a tensile strength of 780 MPa class or higher, which is higher than the yield strength of plain carbon steel. From the same viewpoint, a metal sheet having a tensile strength of 1180 MPa class or more is more preferable, and a metal sheet having a tensile strength of 1470 MPa class or more is particularly preferable. In addition, it is known that about 1/3 of a tensile strength corresponds to a Vickers hardness HV (for example, JIS Handbook (1) Steel I, edited by Japanese Standards Association, SAE-J-417 Hardness Conversion Table). Therefore, the metal sheet constituting the impact absorption structural portion 4 preferably has the Vickers hardness HV of 250 or more at a position of 1/4 of the sheet thickness of the metal sheet, more preferably 310 or more, and particularly preferably 440 or more.

The metal sheet constituting the impact absorption structural portion 4 is preferably a steel sheet containing, by mass%, C: 0.030% or more and 0.250% or less, Si: 0.01% or more and 2.50% or less, Mn: 1.00% or more and less than 3.50%, P: 0.001% or more and 0.100% or less, S: 0.0200% or less, and Al: 0.010% or more and 2.000% or less. When an amount of C is less than 0.030%, it is generally difficult to increase the tensile strength of the metal sheet (for example, 780 MPa class or more). When the tensile strength of the metal sheet is low, it is difficult to secure a crashworthiness load of the impact absorption structural portion 4 at the time of side collision, and crash worthiness deteriorates. On the other hand, when the amount of C is more than 0.250%, martensite which is a hard phase to be described later becomes brittle and ductility deteriorates, so that bendability is likely to deteriorate, and fracture of the metal sheet is likely to occur when the impact absorption structural portion 4 is crushed. Therefore, the amount of C is preferably 0.030% or more and 0.250% or less. In addition, from the viewpoint described above, the amount of C is more preferably 0.100% or more and 0.250% or less, and still more preferably 0.150% or more and 0.250% or less.

Si is an element that improves the balance between the tensile strength and the elongation (ductility) by solid-solution strengthening the steel, and is effective in generating residual austenite described later. In order to obtain such an effect, an amount of Si is preferably 0.01% or more. On the other hand, when the amount of Si exceeds 2.50%, the bendability is likely to deteriorate due to a decrease in ductility due to brittleness, and fracture of the metal sheet likely to occur when the impact absorption structural portion 4 is crushed. Therefore, the amount of Si is preferably 0.01% or more and 2.50% or less. Mn is an element which is effective in strengthening the steel and promotes the generation of martensite which is a hard phase. In order to obtain such an effect, an amount of Mn is preferably 1.00% or more. When the amount of Mn is less than 1.00%, the generation of martensite is not promoted, and it is generally difficult to increase the tensile strength of the metal sheet (for example, 780 MPa class or more). On the other hand, when the amount of Mn exceeds 3.50%, the bendability is likely to deteriorate due to a decrease in ductility, and fracture of the metal sheet is likely to occur when the impact absorption structural portion 4 is locally deformed. Therefore, the amount of Mn is preferably 1.00% or more and 3.50% or less.

P is an element which is effective for strengthening the steel. In order to obtain such an effect, P is preferably 0.001% or more. On the other hand, when an amount of P is more than 0.100%, grain boundary segregation occurs, causing brittleness in the steel, and the crashworthiness characteristics are likely to deteriorate. Therefore, the amount of P is preferably 0.001% or more and 0.100% or less. Since S exists as inclusion such as MnS and deteriorates crashworthiness characteristics and weldability, an amount of S is preferably reduced as much as possible, but the amount of S is preferably 0.0200% or less in consideration of manufacturing cost. Al is an element which is effective in generating ferrite and improving the TS-El balance (balance between tensile strength and elongation). In order to obtain such an effect, an amount of Al is preferably 0.010% or more. On the other hand, when the amount of Al exceeds 2.000%, there is a risk of a crack of slab during continuous casting. Therefore, the amount of Al is preferably 0.010% or more and 2.000% or less.

The steel sheet may further contain, by mass%, at least one kind of element selected from N: 0.0100% or less, Nb: 0.200% or less, Ti: 0.200% or less, V: 0.200% or less, B: 0.0100% or less, Cr: 1.000% or less, Ni: 1.000% or less, Mo: 1.000% or less, Sb: 0.200% or less, Sn: 0.200% or less, Cu: 1.000% or less, Ta: 0.100% or less, W: 0.500% or less, Mg: 0.0200% or less, Zn: 0.0200% or less, Co: 0.0200% or less, Zr: 0.1000% or less, Ca: 0.0200% or less, Se: 0.0200% or less, Te: 0.0200% or less, Ge: 0.0200% or less, As: 0.0500% or less, Sr: 0.0200% or less, Cs: 0.0200% or less, Hf: 0.0200% or less, Pb: 0.0200% or less, Bi: 0.0200% or less, and REM: 0.0200% or less. The remainder of the steel component is Fe and inevitable impurities.

The metal sheet constituting the impact absorption structural portion 4 preferably has a steel structure including, at a position of 1/4 of the sheet thickness of the metal sheet, ferrite in an area ratio of 0% or more and 65% or less, martensite and tempered martensite in a total area ratio of 30% or more and 100% or less, and residual austenite in an area ratio of 0% or more and 15% or less. Ferrite which is a soft phase can be appropriately contained in order to enhance ductility of the metal sheet (steel sheet), but when the area ratio exceeds 65%, it is generally difficult to increase the tensile strength of the metal sheet (for example, 780 MPa class or more). Therefore, the area ratio of ferrite is preferably 0% or more and 65% or less. Martensite and tempered martensite contribute to reinforcement of the metal sheet (steel sheet), and are necessary structures from the viewpoint of obtaining a high tensile strength (for example, 780 MPa class or more). In order to obtain such an effect, the area ratio of martensite and tempered martensite is preferably 30% or more and 100% or less in total. The residual austenite may be contained for the purpose of improving ductility, but when the area ratio exceeds 15%, the residual austenite transforms into hard martensite after press forming, leading to a decrease in ductility (bendability), and the fracture resistance at bending (crash worthiness) at the time of local deformation of the impact absorption structural portion 4 is likely to deteriorate. Therefore, the area ratio of residual austenite is preferably 0% or more and 15% or less.

In order to obtain such a steel structure, for example, it is effective to subject a slab having the above components to hot rolling and cold rolling to obtain a cold-rolled steel sheet, and to subject the cold-rolled steel sheet to annealing under appropriate annealing conditions. As the annealing conditions, the cold-rolled steel sheet is heated to a temperature region equal to or higher than an $Ac_3$ transformation point, held as necessary, and subjected to austenite transformation, and then cooled to a temperature region equal to or lower than a temperature at which transformation from austenite to martensite starts (Ms point) to obtain a structure of martensite, untransformed austenite, and ferrite. Thereafter, it is reheated to a temperature range of the Ms point or more and less than an $Ac_1$ transformation point and held as necessary. This causes the martensite to become tempered martensite and the untransformed austenite to become martensite or residual austenite.

In addition, in a process in which a collision load is input from the side surface of the side sill structure of the present invention and the impact absorption structural portion 4 exceeds a buckling strength and crushes, the impact absorption structural portion 4 (horizontal partition member 5 and bulkhead 6) absorbs collision energy by repeatedly generating buckling deformation in a bellows shape while bending. In this process, when the impact absorption structural portion 4 is buckled and deformed without fracture, the collision energy is most easily absorbed. In order to obtain such an effect, the metal sheet of the impact absorption structural portion 4 preferably has an ultimate deformability $\varepsilon_l$, which is a

strain at fracture in a tensile test, of 0.55 or more. As a result, fracture hardly occurs even against locally severe deformation due to crushing, the strength of the entire side sil structure is sufficiently secured, and a high collision energy absorption property can be obtained. In consideration of variations in material, the ultimate deformability $\varepsilon_l$ of the metal sheet is more preferably 0.75 or more, particularly preferably 0.88 or more.

The ultimate deformability $\varepsilon_l$ is calculated by performing a room temperature tensile test in accordance with JIS Z2241, measuring a sheet width W and a sheet thickness T at the fracture surface of the tensile test piece after the tensile test, and using the following formula (1) together with a sheet width $W_0$ and a sheet thickness $T_0$ of the tensile test piece before the tensile test.

$$\varepsilon_l = -\{ \ln(W/W_0) + \ln(T/T_0) \} \qquad (1)$$

provided that,

W: a sheet width (mm) at a fracture surface of a tensile test piece after a tensile test
$W_0$: a sheet width (mm) of a tensile test piece before a tensile test
T: a sheet thickness (mm) at a fracture surface of a tensile test piece after a tensile test
$T_0$: a sheet thickness (mm) of a tensile test piece before a tensile test

In order to enhance the ultimate deformability $\varepsilon_l$ of the metal sheet, for example, it is effective to adjust cooling conditions (temperature to interrupt cooling and cooling rate), reheating conditions (reheat temperature and holding time), and the like at the time of annealing in order to appropriately balance the area ratio of tempered martensite, which is the second phase effective for achieving a high strength while enhancing the ultimate deformability of the metal sheet, and martensite.

In addition, in a bellows-shaped bent portion where the impact absorption structural portion 4 is buckled and deformed in a bellows shape, stress is concentrated on an outer surface of the bend, and fracture is likely to occur. Therefore, it is preferable to use a metal sheet having excellent bendability as the metal sheet of the impact absorption structural portion 4. Specifically, it is preferable to use a metal sheet having excellent bendability, in which a ratio R/t of a critical curvature radius R (mm) (that is, a tip radius R of a minimum V-type punch at which a crack (fracture) does not occur) to a sheet thickness t (mm) in a 90° V-bending test based on the V-block method of JIS Z2248 is 7.0 or less. In consideration of variations in material, a metal sheet having R/t of 3.5 or less is more preferable, and a metal sheet having R/t of 2.0 or less is particularly preferable. In order to enhance the bendability of the metal sheet and obtain R/t as described above, for example, it is effective to adjust cooling conditions (temperature to interrupt cooling and cooling rate), reheating conditions (reheat temperature and holding time), and the like during annealing in order to appropriately adjust the area ratio of residual austenite. The yield strength (crashworthiness load) of the metal sheet constituting the impact absorption structural portion 4 (horizontal partition member 5 and bulkhead 6) is preferably equal to or less than the yield strength of the metal sheet constituting the floor cross member. This is because the impact absorption structural portion 4 is reliably deformed prior to the floor cross member at the time of side collision to absorb collision energy, and deformation of the floor cross member is suppressed.

In the side sill structure including the impact absorption structural portion 4 described above, the following effects (i) to (vii) are obtained in a combined manner, so that a high collision energy absorption property is obtained. In particular, in this structure, since desired crash worthiness can be obtained even when the number of bulkheads 6 to be installed is reduced, there is an advantage that a high collision energy absorption property can be obtained with a small collision deformation amount while suppressing an increase in weight by the structural member.

(i) The impact absorption structural portion 4 includes the horizontal partition member 5 that traverses the closed sectional spaces 3a and 3b in the vehicle body width direction, and the plurality of bulkheads 6 disposed in the upper space 30a partitioned by the horizontal partition member 5. In addition, since the horizontal partition members 5 and the bulkheads 6 on the vehicle inner side and the outer side are disposed to face each other in the vehicle width direction with the vertical partition member 2 sandwiched therebetween, the impact absorption structural portion 4 has high bending stiffness (bending deformation resistance against a side collision load). Therefore, local deformation around the input location of the side collision load is suppressed, and collision energy absorption (EA) can be enhanced by deforming the entire impact absorption structural portion 4 at the time of side collision. In the impact absorption structural portion 4, the horizontal partition member 5 and the bulkhead 6 cooperate to suppress the cross-section collapsing of the side sill 1 at the time of side collision, and the bulkhead 6 itself is buckled and bent and crushed to absorb collision energy, and collision energy can be effectively absorbed with a small collision deformation amount.
(ii) A load transfer path from the initial stage of the collision to the floor cross member and the battery case (battery case side member) is secured by the horizontal partition members 5 on the vehicle body inner side and the outer side that traverse the closed sectional spaces 3a and 3b in the vehicle body width direction and disposed to face each other with the vertical partition member 2 sandwiched therebetween. As a result, the side sill and the impact absorption structural portion 4 are crushed by a reaction force from the floor cross member and the battery case, so that collision energy can be effectively absorbed.

(iii) The horizontal partition member 5 is a member that horizontally traverses the closed sectional spaces 3a and 3b in the vehicle body width direction and extends in the vehicle longitudinal direction, and the plurality of beads 7 are provided on the horizontal partition member surface at intervals in the vehicle longitudinal direction. Therefore, it is possible to receive a collision load of an impact object (pole) in a circumferential direction at any position in the vehicle longitudinal direction and to effectively absorb collision energy.

(iv) Since the impact absorption structural portion 4 and the members surrounding the impact absorption structural portion 4 (the vertical partition member 2 and the side sill 1) function as an integrated structure at the time of side collision, a collision load can be dispersed and transmitted to the floor cross member and the battery case over a wide range in the vehicle longitudinal direction. Therefore, the collision load transmitted to the battery pack can be reduced.

(v) The horizontal partition members 5 and the bulkheads 6 on the vehicle body inner side and the outer side constituting the impact absorption structural portion 4 are disposed to face each other with the vertical partition member 2 vertically passing through the closed sectional space 3 sandwiched therebetween, so to speak, the vertical partition member 2 divides the horizontal partition member 5 and the bulkhead 6 in the vehicle width direction. Therefore, the wavelength of buckling of the impact absorption structural portion 4 (horizontal partition member 5 and bulkhead 6) in the vehicle width direction can be shortened, and the buckling strength of the impact absorption structural portion 4 is improved, so that a collision energy absorption property is enhanced.

(vi) The rigidity of the horizontal partition member 5 is enhanced by the bead 7 formed on the horizontal partition member 5, and the collision energy absorption property is enhanced by an increase in the collision maximum load (crashworthiness load) generated at the initial stage of deformation at the time of side collision. In addition, by providing the plurality of beads 7 on the horizontal partition member surface at intervals in the vehicle longitudinal direction, it is possible to suppress strain propagation of the horizontal partition member 5 at positions other than the side collision position and to suppress buckling of the horizontal partition member 5. Therefore, local deformation of the impact absorption structural portion 4 can be reduced, and a collision energy absorption property can be enhanced.

(vii) The horizontal partition member 5 constituting the impact absorption structural portion 4 is a member extending in the vehicle longitudinal direction, and functions as an impact absorption member regardless of a side collision position in the vehicle longitudinal direction since the plurality of beads 7 are provided at intervals in the vehicle longitudinal direction. Moreover, as described above, the impact absorption structural portion 4 and the members (the vertical partition member 2 and the side sill 1) surrounding the impact absorption structural portion 4 function as an integrated structure at the time of side collision. Therefore, even when the number of bulkheads 6 to be installed is small, a high collision energy absorption property can be obtained, and an increase in weight due to the structural member can be suppressed accordingly.

FIG. 6 illustrates other arrangement mode examples of the bulkheads 6 in the vehicle front-rear direction, and the bulkheads 6 are provided at different intervals for each region in the vehicle front-rear direction. In these arrangement modes, the bulkheads 6 provided at a plurality of locations spaced apart in the vehicle front-rear direction include bulkheads $6_x$ provided in a region within the width wa (= width $W_F$ in FIG. 2) of the floor cross member 10 in the vehicle front-rear direction and bulkheads $6_y$ provided in a region other than the region (region outside the width of the floor cross member 10). Then, in the vehicle front-rear direction, the bulkheads $6_x$ are provided at two or more locations (two locations in the embodiment of FIG. 6) in the region inside the width wa of the floor cross member 10, and the bulkheads $6_y$ are provided at one or more locations in the region outside the width of the floor cross member 10. Furthermore, when the interval between two adjacent bulkheads $6_x$ is represented by w1, and the interval between the bulkhead $6_x$ and the bulkhead $6_y$ adjacent thereto is represented by w2, w1 < w2 is satisfied. The arrangement mode of the bulkheads 6 as described above is configured such that the bulkheads $6_x$ are provided at two or more locations in the region within the width wa of the floor cross member 10 to reduce the interval between the bulkheads $6_x$ to enhance the crash worthiness, and the interval between the bulkheads $6_y$ in the region other than the region and the bulkheads $6_x$ is increased to suppress the number of bulkheads 6 to be installed to reduce the weight. When the bulkheads $6_y$ are provided at two or more locations in the region outside the width of the floor cross member 10, an interval w3 between two adjacent bulkheads $6_y$ is preferably set to satisfy w1 < w3.

On the other hand, the interval w2 between the adjacent bulkheads $6_x$ and $6_y$ and the interval w3 between the adjacent bulkheads $6_y$ are preferably as wide as possible from the viewpoint of weight reduction of the impact absorption structural portion 4, but are preferably 254 mm or less in order to secure bending stiffness of the impact absorption structural portion 4 at the time of side collision. This 254 mm is a diameter of the impact object (pole) used in the side impact test (side pole impact test as defined in Euro NCAP). By setting the intervals w2 and w3 to be equal to or less than the diameter of the impact object (pole) in this test, it is possible to more appropriately secure the bending stiffness of the impact absorption structural portion 4 at the time of side collision. From the same viewpoint, the interval w2 between the adjacent bulkheads $6_x$ and $6_y$ and the interval w3 between the bulkheads $6_y$ are preferably about 1/4 to 1/2 of the installation interval of the floor cross members 10 (an interval wb between the adjacent floor cross members 10). For example, when the installation interval wb of the floor cross members 10 is 260 mm, the interval w2 and the interval w3 are preferably about 65 mm to 130 mm. From the viewpoint of weight reduction of the impact absorption structural portion 4, the interval w2 and the interval w3 are preferably 50 mm or more.

The arrangement mode of FIG. 6(a) is an example in which the bulkhead $6_y$ is provided at one location in a region outside the width of the floor cross member 10 between the adjacent floor cross members 10, and the bulkheads $6_x$ and $6_y$ are provided under a condition that w1 < w2 is satisfied. Further, the arrangement modes of FIGS. 6(b) and (c) are examples in which the bulkheads $6_y$ are provided at two to three locations in the region outside the width of the floor cross member 10 between the adjacent floor cross members 10, and the bulkheads $6_x$ and $6_y$ are provided under the condition that w1 < w2 and w1 < w3 are satisfied.

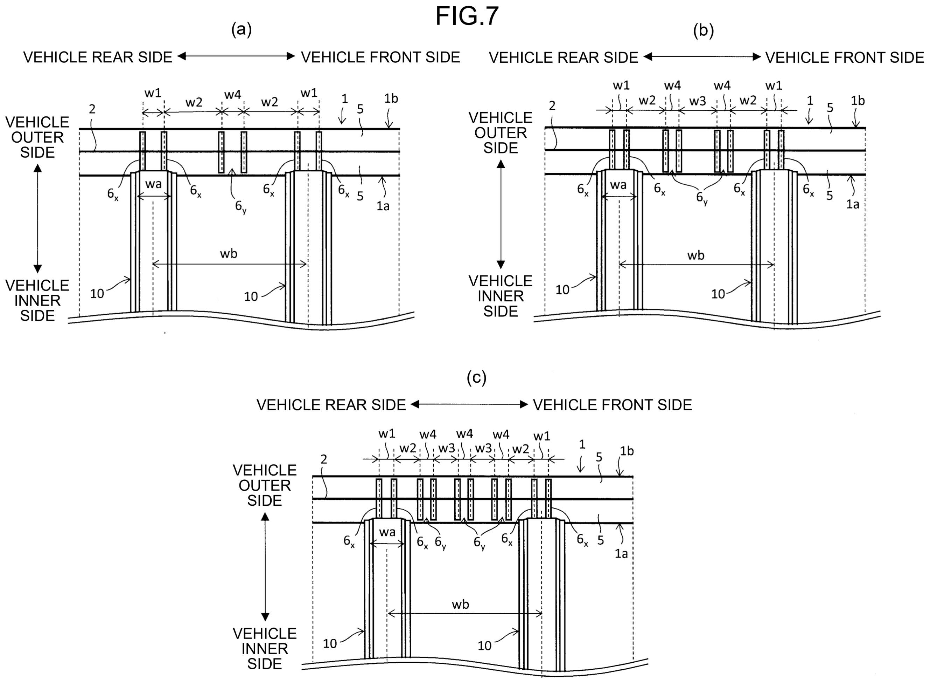

FIG. 7 illustrates other arrangement mode examples of the bulkheads 6 in the vehicle front-rear direction, and similarly to the embodiment of FIG. 6, the bulkheads 6 are provided at different intervals for each region in the vehicle front-rear direction. In this embodiment, in order to further enhance the bending stiffness of the impact absorption structural portion 4 between the floor cross members 10, the bulkheads $6_y$ provided in a region outside the width of the floor cross member 10 are configured by a bulkhead set including two or more bulkheads (two bulkheads in the embodiment of FIG. 7) provided adjacent to each other. Therefore, respective bulkheads $6_y$ of the embodiment of FIG. 7 include a bulkhead set including two bulkheads as one set. Although a size of an interval w4 between the bulkheads constituting the bulkhead set is arbitrary, the interval w4 is basically determined from substantially the same viewpoint as the interval w1, and thus, the condition may be the same as the above-described interval w1. The configuration of the bulkheads $6_y$ including the bulkhead set including two or more bulkheads in this manner may target all of the bulkheads $6_y$ or may target only some of the bulkheads $6_y$.

The arrangement mode of FIG. 7(a) is an example in which the bulkheads $6_y$ (a bulkhead set including two bulkheads as one set) are provided at one location in a region of adjacent floor cross members 10 outside the width of the floor cross member 10. In this arrangement mode, the bulkheads $6_x$ and $6_y$ are provided under the condition that w1 < w2 is satisfied. In addition, the arrangement modes of FIGS. 7(b) and 7(c) are examples in which the bulkheads $6_y$ (a bulkhead set including two bulkheads as one set) are provided at two to three locations in a region between the adjacent floor cross members 10 and outside the width of the floor cross member 10. In this arrangement mode, the bulkheads $6_x$ and $6_y$ are provided under conditions that w1 < w2 and w1 < w3 are satisfied.

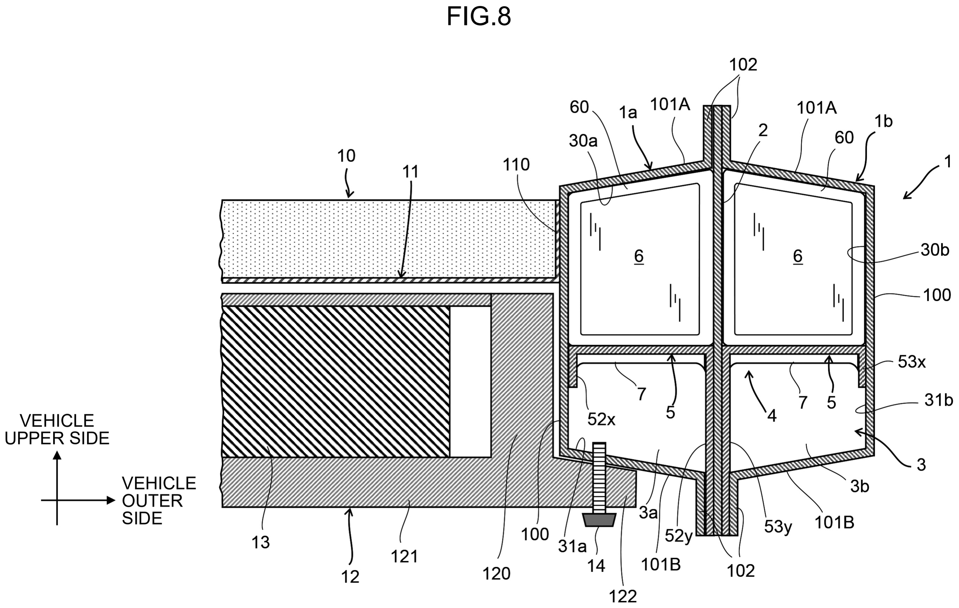

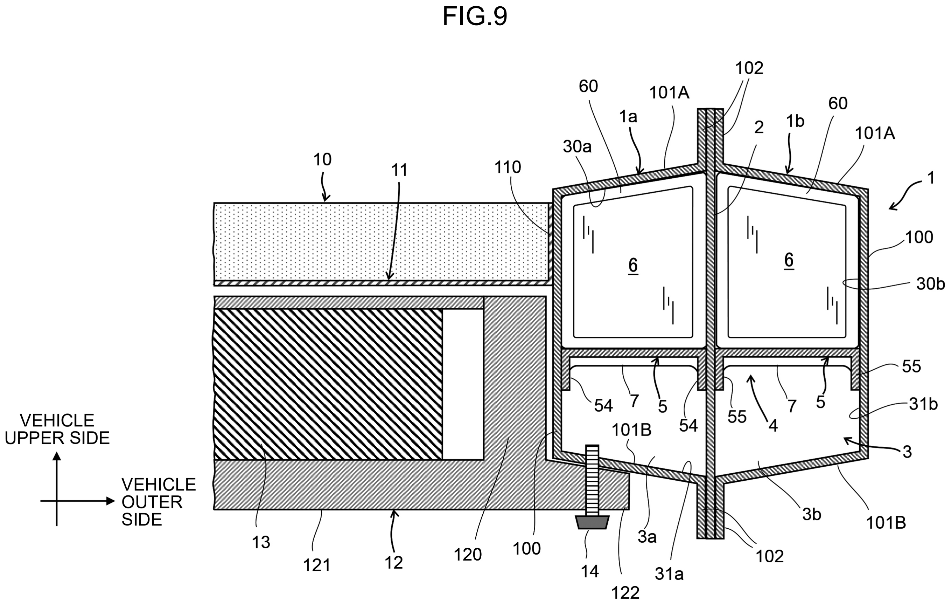

Normally, the horizontal partition member 5 has a flange portion for mounting, and as illustrated in FIG. 1, the horizontal partition member 5 is mounted and joined to another member via the flange portion. However, the configuration of the flange portion in this case (for example, a method of providing the flange portion and a direction in which the flange portion is provided) is not particularly limited. FIGS. 8 and 9 illustrate another embodiment in which the horizontal partition member 5 has a different mounting/joining structure, respectively. FIG. 8 schematically illustrates another embodiment of the side sill structure of the present invention and the vehicle body lower structure including the side sill structure, and is a longitudinal cross-sectional view in the vehicle width direction of the vehicle body lower structure including the side sill (one structural portion of the structural portions on both sides of the vehicle body lower portion). In this embodiment, the horizontal partition member 5 in the closed sectional space 3a on the vehicle inner side has a flange portion 52x connected downward (toward the downward direction) on one end side in the vehicle width direction and a flange portion 52y connected downward (toward the downward direction) on the other end side. The flange portion 52y extends to the lower end portion of the side sill 1 along the vertical partition member 2. The flange portion 52x on one end side is joined to an inner surface of the side sill inner 1a, and the lower end portion of the flange portion 52y on the other end side is joined to the side sill inner 1a and the vertical partition member 2 in a state of being sandwiched between a lower end portion (flange portion 102) of the side sill inner 1a and a lower end portion of the vertical partition member 2.

In addition, the horizontal partition member 5 in the closed sectional space 3b on the vehicle outer side has a flange portion 53x connected downward (toward the downward direction) on one end side in the vehicle width direction and a flange portion 53y connected downward (toward the downward direction) on the other end side. The flange portion 53y extends to the lower end portion of the side sill 1 along the vertical partition member 2. The flange portion 53x on one end side is joined to an inner surface of the side sill outer 1b, and the lower end portion of the flange portion 53y on the other end side is joined to the side sill outer 1b and the vertical partition member 2 in a state of being sandwiched between a lower end portion (flange portion 102) of the side sill outer 1b and the lower end portion of the vertical partition member 2. Since other configurations of the present embodiment are similar to those of the embodiment of FIG. 1, the same reference numerals are given and detailed description thereof is omitted.

When the horizontal partition member 5 has such a mounting/joining structure via the flange portions 52x, 52y, 53x, and 53y, the side sill structure can be easily assembled as follows. The horizontal partition member 5 on the vehicle inner side is joined and fixed to the side sill inner 1a by joining the flange portion 52x to the vertical surface portion 100 of the side sill inner 1a and joining the lower end portion of the flange portion 52y to the lower flange portion 102 of the side sill inner 1a. The horizontal partition member 5 on the vehicle outer side is joined and fixed to the side sill outer 1b by joining the flange portion 53x to the vertical surface portion 100 of the side sill outer 1b and joining the lower end portion of the flange portion 53y to the lower flange portion 102 of the side sill outer 1b. Then, in a state where the vertical partition member 2 is sandwiched between the side sill inner 1a and the side sill outer 1b to which the horizontal partition member 5 is respectively joined and fixed, the three members are joined. As a joining mode in this case, for example, for the lower end side of the side sill 1, the flange portion 52y (the lower end portion of the flange portion 52y) of the horizontal partition member 5 on the vehicle inner side joined to the lower flange portion 102 of the side sill inner 1a, the flange portion 53y (the lower end portion of the flange portion 53y) of the horizontal partition member 5 on the vehicle outer side joined to the lower flange portion 102 of the side sill outer 1b, and the lower end portion of the vertical partition member 2 may be joined (spot welded). With respect to the upper end side of the side sill 1, the upper flange portion 102 of the side sill inner 1a, the upper flange portion 102 of the side sill outer 1b, and the upper end portion of the vertical partition member 2 may be joined (spot welded).

FIG. 9 schematically illustrates another embodiment of the side sill structure of the present invention and the vehicle body lower structure including the side sill structure, and is a longitudinal cross-sectional view in the vehicle width direction of the vehicle body lower structure including the side sill (one structural portion of the structural portions on both sides of the vehicle body lower portion). In this embodiment, the horizontal partition member 5 in the closed sectional space 3a on the vehicle inner side has the flange portions 54 connected downward (toward the downward direction) to each of one end side and the other end side in the vehicle width direction. The flange portion 54 on one end side is joined to the inner surface of the side sill inner 1a, and the flange portion 54 on the other end side is joined to the surface of the vertical partition member 2 on the vehicle inner side. The horizontal partition member 5 in the closed sectional space 3b on the vehicle outer side has a flange portion 55 connected downward (toward the downward direction) to each of one end side and the other end side in the vehicle width direction. The flange portion 55 on one end side is joined to the inner surface of the side sill outer 1b, and the flange portion 55 on the other end side is joined to the surface of the vertical partition member 2 on the vehicle outer side. Since other configurations of the present embodiment are similar to those of the embodiment of FIG. 1, the same reference numerals are given and detailed description thereof is omitted.

The assembly of the side sill structure of the embodiment of FIG. 9 takes a little more time and effort than the above two examples (embodiments of FIGS. 1 and 8), but can be performed, for example, as follows. The horizontal partition member 5 on the vehicle inner side is joined and fixed to the side sill inner 1a by joining one flange portion 54 to the vertical surface portion 100 of the side sill inner 1a. Next, the vertical partition member 2 is disposed on the side sill inner 1a in a state where components are assembled, and one flange portion 55 of the horizontal partition member 5 on the vehicle outer side is disposed in a state of facing the other flange portion 54 of the horizontal partition member 5 on the vehicle inner side with the vertical partition member 2 sandwiched therebetween, and the three members are joined. Next, the side sill outer 1b is disposed on the side sill inner 1a and the vertical partition member 2 in a state where components are assembled, and the other flange portion 55 of the horizontal partition member 5 on the vehicle outer side and the vertical surface portion 100 of the side sill outer 1b are joined. Then, in a state where the vertical partition member 2 is sandwiched between the side sill inner 1a and the side sill outer 1b to which the horizontal partition member 5 is respectively joined and fixed, the three members are joined. In this case, with respect to the upper end side of the side sill 1, the upper flange portion 102 of the side sill inner 1a, the upper flange portion 102 of the side sill outer 1b, and the upper end portion of the vertical partition member 2 may be joined (spot welded). With respect to the lower end side of the side sill 1, the lower flange portion 102 of the side sill inner 1a, the lower flange portion 102 of the side sill outer 1b, and the lower end portion of the vertical partition member 2 may be joined (spot welded).

Next, a vehicle body lower structure to which the side sill structure of an automobile of the present invention is applied will be described. A vehicle body lower structure to which the side sill structure of an automobile of the present invention is applied includes side sills 1 (side sill structure) disposed on both sides of the vehicle body lower portion along the vehicle longitudinal direction, a floor cross member 10 disposed on a floor panel 11 along a vehicle width direction and connecting both side sills 1 (connected directly or via a part of the floor panel or the like), and a battery case 12 disposed between both side sills 1 on a lower side of the floor cross member 10. The floor panel 11 is disposed between both side sills 1 disposed on both sides of the vehicle body lower portion along the vehicle longitudinal direction. The floor panel 11 is joined to both side sills 1 (the upper portion of the vertical surface portion 100 of the side sill inner 1a in FIG. 1) via both flange portions 110. Further, the floor cross member 10 which is a frame structure member along the vehicle width direction is disposed on the floor panel 11. Both ends of the floor cross member 10 are joined (fixed) to both side sills 1 (the upper portion of the vertical surface portion 100 of the side sill inner 1a in FIG. 1) via the flange portions 110 of the floor panel 11, thereby connecting both side sills 1. The floor cross members 10 are provided at a plurality of locations at predetermined intervals (for example, about 300 mm) in the vehicle longitudinal direction. The floor panel 11 or the floor cross member 10 and the side sill 1 are normally joined (fixed) by spot welding.

The battery case 12 housing a battery pack 13 is disposed below the floor panel 11 and the floor cross member 10. A side portion (battery case side member 120) of the battery case 12 faces a lower portion of the side sill 1 (a lower portion of the vertical surface portion 100 of the side sill inner 1a) at a predetermined interval. A mounting flange 122 is connected to a bottom portion (battery case bottom sheet portion 121) of the battery case 12 so as to protrude toward the side sill side. The battery case 12 is held by the side sill 1 by fastening the mounting flange 122 and the lower end of the side sill 1 (the lower horizontal surface portion 101B of the side sill inner 1a) with a fixing bolt 14.

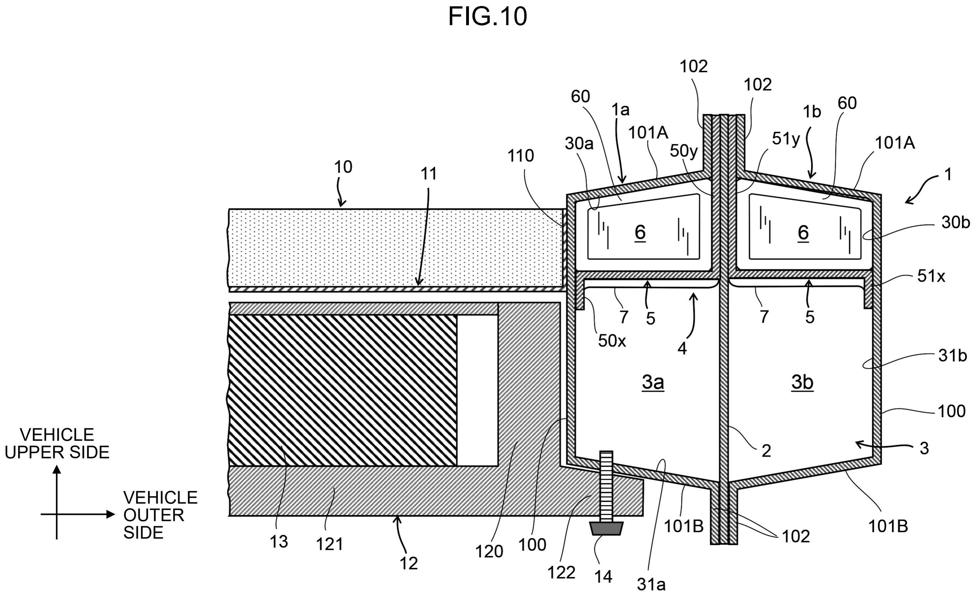

The role of the floor cross member 10 and the battery case side member 120 is load transmission, and when these members are buckled and deformed, the effect is significantly reduced. Therefore, it is necessary to adjust a transferred load so as to be equal to or less than the buckling strength of the members. A load transmission amount to these members varies depending on an overlapping amount of the impact absorption member, and can be adjusted by a height position of the horizontal partition member 5. For example, when the buckling strength of the battery case 12 is low and it is not desired to transmit a collision load, the height position of the horizontal partition member 5 may be increased, and the horizontal partition member 5 may be provided such that the floor cross member 10 is positioned on the horizontal extension thereof as in the embodiment of FIG. 10 described later. As a result, a transferred load to the battery case 12 can be reduced. In the embodiment of FIG. 1, the battery case side member 120 and the side sill 1 adjacent to each other in the vehicle width direction are disposed at positions where at least parts thereof overlap each other when viewed from the side of the vehicle, and the horizontal partition member 5 is provided so that the battery case side member 120 is positioned on the horizontal extension thereof.

In such a vehicle body lower structure, the collision load input to the side sill 1 at the time of side collision is input to both the floor cross member 10 and the battery case 12 (battery case side member 120). As a result, it is possible to receive a load in a wide range, and the collision load is input to the floor cross member 10 joined (fixed) to the side sill 1 prior to the battery case 12, and the load input to the battery case 12 is reduced. In this case, the crashworthiness load of the members constituting the impact absorption structural portion 4 is preferably equal to or less than the crashworthiness load of the floor cross member 10 and the battery case side member 120. This is to ensure that, at the time of side collision, the impact absorption structural portion 4 is reliably deformed prior to the floor cross member 10 and the battery case side member 120 to absorb collision energy. As a result, deformation of the floor cross member 10 and the battery case side member 120 is suppressed.

FIG. 10 schematically illustrates another embodiment of the side sill structure of an automobile of the present invention and the vehicle body lower structure including the side sill structure, and is a longitudinal cross-sectional view in the vehicle width direction of the vehicle body lower structure including the side sill (one structural portion of the structural portions on both sides of the vehicle body lower portion). FIG. 10 illustrates an embodiment of the vehicle body lower structure different from that of FIG. 1. As shown in this embodiment, the horizontal partition member 5 can be provided such that the floor cross member 10 is positioned on the horizontal extension thereof. As described above, when the buckling strength of the battery case 12 is low and it is not desired to transmit the collision load, the transferred load to the battery case 12 can be reduced by increasing the height position of the horizontal partition member 5. In this case, the crashworthiness load of the members constituting the impact absorption structural portion 4 is preferably equal to or less than the crashworthiness load of the floor cross member 10. This is to ensure that, at the time of side collision, the impact absorption structural portion 4 is reliably deformed prior to the floor cross member 10 to absorb collision energy, and deformation of the floor cross member 10 is suppressed. Since other configurations of the present embodiment are similar to those of the embodiment of FIG. 1, the same reference numerals are given and detailed description thereof is omitted.

[Examples]

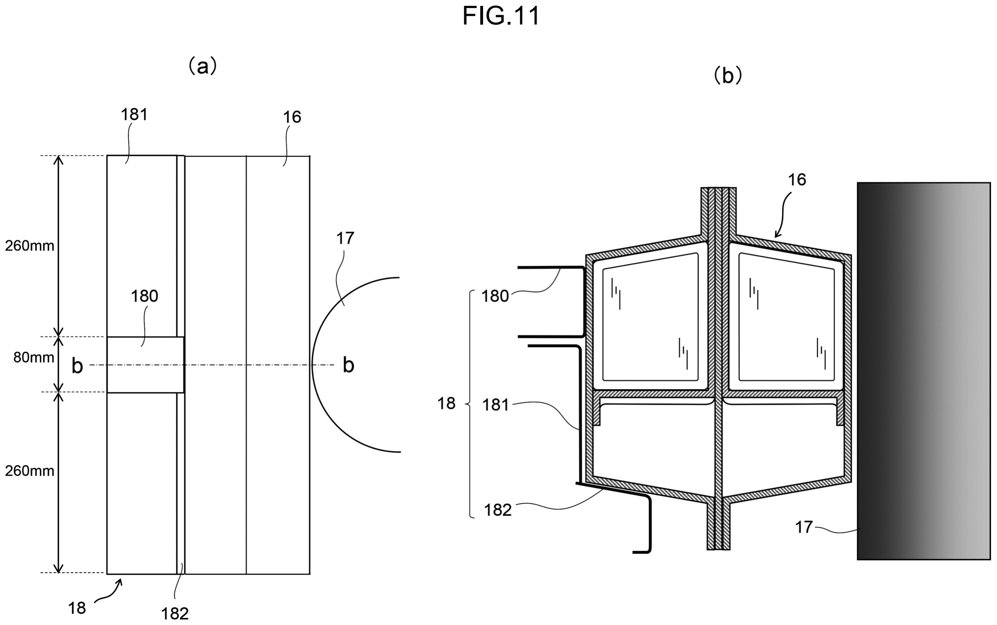

In order to confirm the effect of the side sill structure of an automobile of the present invention, a crash test by the following FEM analysis (finite element method analysis) was performed. In this crash test, the side sill structures of the invention examples and the comparative examples were used as test bodies, and deformation modes due to collision and collision energy absorption characteristics were evaluated. In addition, a rigid body jig for fixing the test body was used as a member corresponding to a floor cross member or a battery case side member adjacent to the side sill, and a transferred load to the rigid body jig was evaluated by a contact reaction force. FIG. 11 schematically illustrates test conditions of the crash test for the invention examples. FIG. 11(a) is a plan view, and FIG. 11(b) is a cross-sectional view taken along line b-b in FIG. 11(a).

As illustrated in FIG. 11, in the crash test, an impact object 17 (pole) having a radius of 127 mm was caused to collide perpendicularly with respect to the longitudinal direction of a test body 16 at an initial speed of 30.9 km/h and a maximum intrusion amount of 100 mm. The collision energy at this time was 32 kJ. A fixing jig 18 of the side sill on the opposite side of the impact object 17 includes a floor cross member simulation portion 180 (corresponding to the floor cross member 10 of FIG. 1), a battery case side member simulation portion 181 (corresponding to the battery case side member 120 of FIG. 1), and a mounting flange simulation portion 182 (corresponding to the mounting flange 122 of FIG. 1) illustrated in FIG. 11, and the mounting flange simulation portion 182 and the side sill inner are fixed by a bolt (corresponding to the fixing bolt 14 of FIG. 1). A width $W_F$ of the floor cross member simulation portion 180 in the vehicle front-rear direction was set to 80 mm. The impact object 17 was caused to collide such that a collision position when viewed from the side was a floor cross member portion. Also in the comparative examples, a crash test was performed under the test conditions according to FIG. 11.

Table 1 shows strength levels and sheet thicknesses of steel sheets used for the respective members of the test bodies of the invention examples and the comparative examples.

Table 1

| Member | Strength level | Sheet thickness |
|---|---|---|
| Side sill 1 | 1470MPa class | 1.6mm |
| Bulkhead 6 | 1470MPa class | 1.6mm |
| Horizontal partition member 5 | 1470MPa class | 1.6mm |
| Vertical partition member 2 | 1470MPa class | 0.8mm |

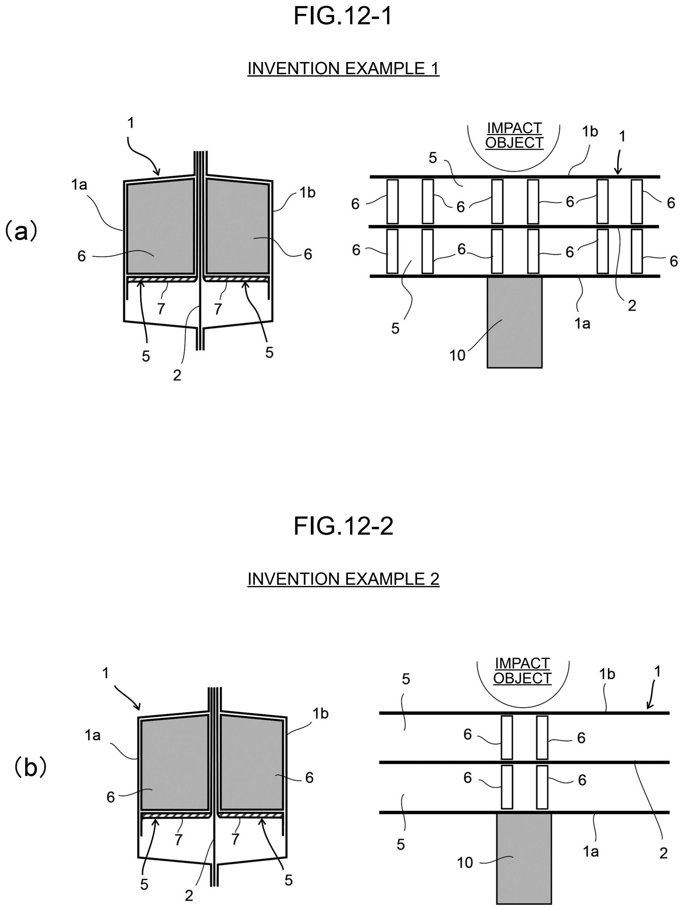

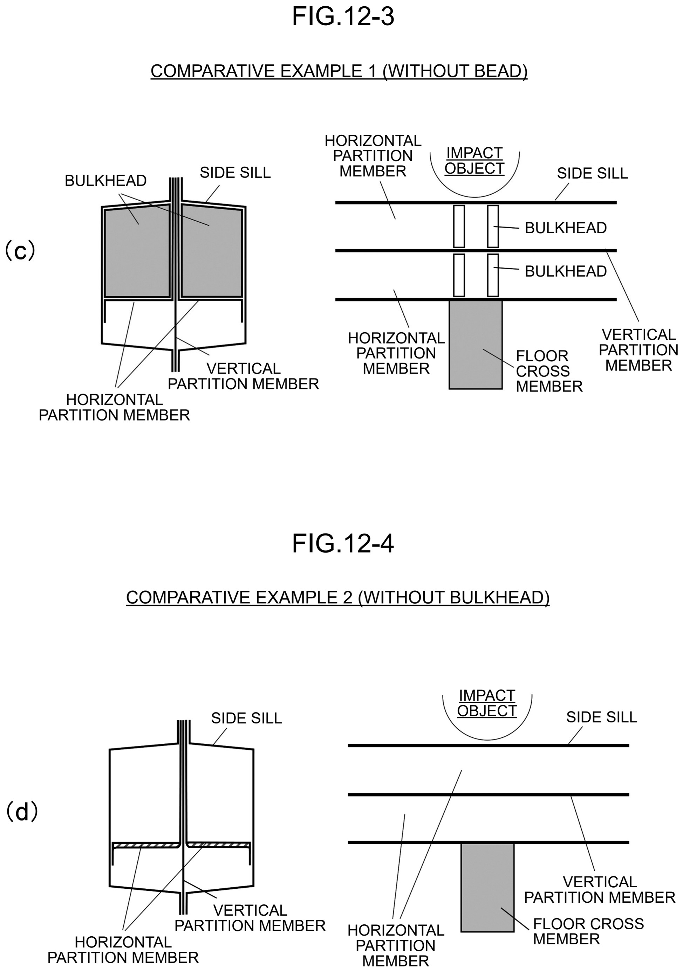

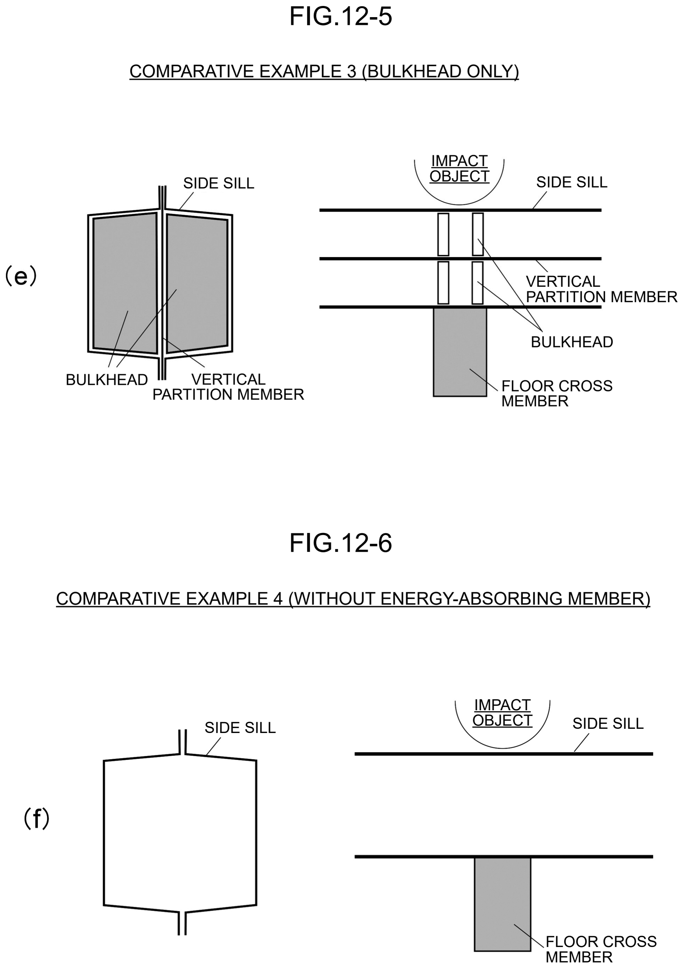

FIGS. 12(a) to (f) illustrate test bodies and test conditions of the invention examples and the comparative examples. In each of FIGS. 12(a) to (f), the schematic view on the left side is a cross-sectional view of the side sill in the vehicle width direction, and the schematic view on the right side is a horizontal cross-sectional view of the side sill, and illustrates a collision position of an impact object (pole) with the side sill and a position of the floor cross member. In Invention Example 1 illustrated in FIG. 12(a), the bulkheads 6 are provided at two locations in the region within the width of the floor cross member simulation portion 180 in the impact absorption structural portion 4, and an interval $W_B$ (= interval w1 in FIG. 6) between the bulkheads 6 was set to 40 mm. A ratio $W_B/W_F$ of the interval $W_B$ to the width $W_F$ (= width wa in FIG. 6) of the floor cross member simulation portion 180 was set to 0.50. In addition, the bulkheads 6 were provided at each of two locations in a region outside the width of the floor cross member simulation portion 180 before and after the bulkheads 6. An interval (= interval w2 in FIG. 6) between the bulkheads 6 and the bulkheads 6 in the width $W_F$ of the floor cross member simulation portion 180 was set to be larger than the interval w1 and was 254 mm or less, and was set to 139 mm which is about 1/2 of an assumed installation interval of the floor cross members (interval between adjacent floor cross members) of 280 mm. Further, an interval (= interval w3 in FIG. 6) between the bulkheads 6 outside the width of the floor cross member simulation portion 180 was set to 40 mm which is the same as the interval w1. The beads 7 formed on each horizontal partition member 5 on the vehicle inner side and the outer side had a depth d of 7 mm and a curvature radius R of 10 mm in the bead cross section as illustrated in FIG. 3. When the flange width $W_{BF}$ of the bulkhead 6 was 20 mm, the inter-bead distance $W_H$ was set to 41 mm which is 1/2 or less of the radius of 127 mm of the impact object (pole).

Invention Example 2 illustrated in FIG. 12(b) was obtained by removing the bulkheads 6 in the region outside the width of the floor cross member simulation portion 180 of Invention Example 1. Comparative Example 1 illustrated in FIG. 12(c) was obtained by removing the beads 7 of the horizontal partition members 5 of Invention Example 2. Comparative Example 2 illustrated in FIG. 12(d) was obtained by removing the bulkheads 6 from the impact absorption structural portion 4 of Invention Example 2. Comparative Example 3 illustrated in FIG. 12(e) was obtained by disposing the vertical partition member and the bulkheads inside the side sill, and disposing the bulkheads at two locations in the region within the width of the floor cross member simulation portion. Comparative Example 4 illustrated in FIG. 12(f) was obtained by using only the side sill as a test body, without disposing the partition member and the impact absorption member inside the side sill.

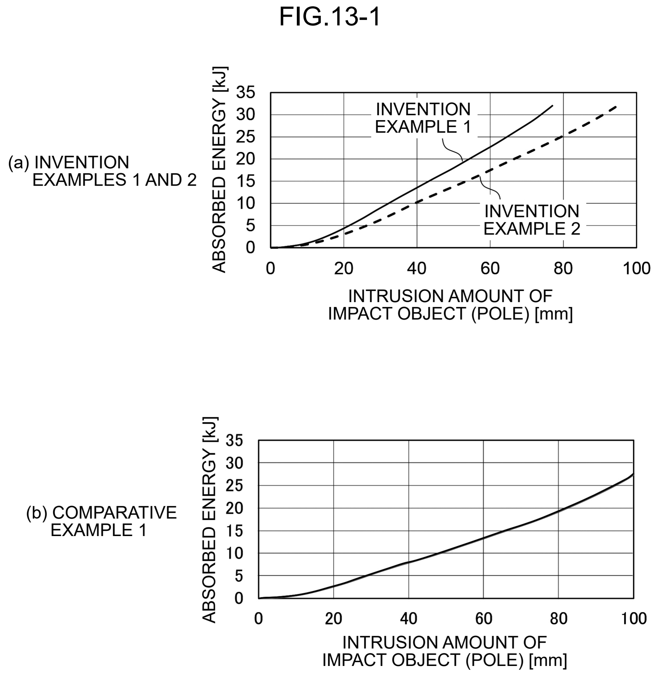

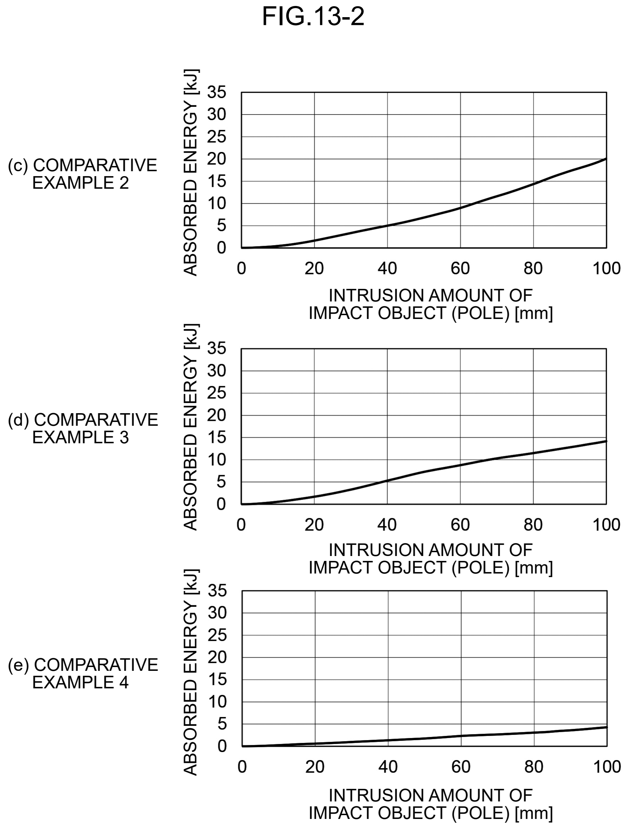

FIGS. 13(a) to (e) illustrate a relationship between an intrusion amount of the impact object (pole) into the side sill and the absorbed energy (transition of the absorbed energy with respect to the intrusion amount of the impact object) at the time of the crash test for the invention examples and the comparative examples. The absorbed energy was calculated by subtracting the kinetic energy calculated from the velocity of the impact object from the collision energy (32 kJ). While the stroke of the impact object was 100 mm at the maximum, in Invention Example 1 illustrated in FIG. 13(a), the impact object stopped before (77 mm) the maximum intrusion amount of the impact object reached 100 mm, and the absorbed energy was 32.0 kJ. In Invention Example 2 illustrated in FIG. 13(a), the impact object stopped before (95 mm) the maximum intrusion amount of the impact object reached 100 mm, and the absorbed energy was 32.0 kJ. On the other hand, in all of Comparative Examples 1 to 4 illustrated in FIGS. 13(b) to (e), the maximum stroke of the impact object reached 100 mm before the absorbed energy reached 32.0 kJ (absorbed energy in the invention examples).

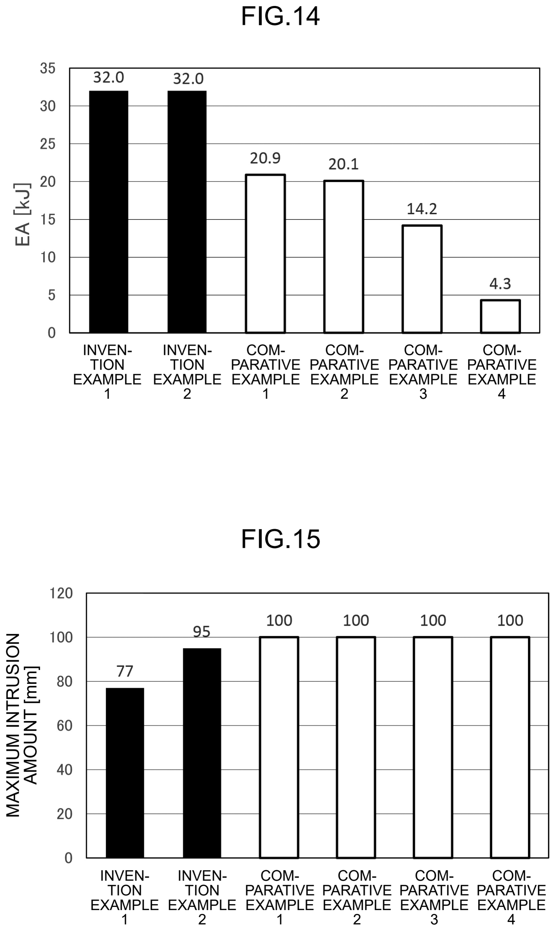

FIG. 14 illustrates comparison of the absorbed energy at the time of maximum intrusion of the impact object between the invention examples and the comparative examples. In addition, in FIG. 15, the maximum intrusion amount of the impact object is illustrated in comparison between the invention examples and the comparative examples.

Industrial Applicability

According to the present invention, it is possible to provide a side sill structure of an automobile capable of obtaining a high collision energy absorption property with a small collision deformation amount while suppressing an increase in weight due to a structural member. Further, according to the present invention, it is possible to provide a vehicle body lower structure including a side sill structure having such excellent crash worthiness.

Reference Signs List

1 SIDE SILL
1a SIDE SILL INNER
1b SIDE SILL OUTER
2 VERTICAL PARTITION MEMBER
3 CLOSED SECTIONAL SPACE
3a, 3b CLOSED SECTIONAL SPACE
4 IMPACT ABSORPTION STRUCTURAL PORTION
5 HORIZONTAL PARTITION MEMBER
6, 6x, 6y BULKHEAD
7 BEAD
10 FLOOR CROSS MEMBER
11 FLOOR PANEL
12 BATTERY CASE
13 BATTERY PACK
14 FIXING BOLT
16 TEST BODY
17 IMPACT OBJECT
18 FIXING JIG
30a, 30b UPPER SPACE
31a, 31b LOWER SPACE
50x, 50y, 51x, 51y FLANGE PORTION
52x, 52y, 53x, 53y FLANGE PORTION
54, 55 FLANGE PORTION
60 FLANGE PORTION
100 VERTICAL SURFACE PORTION
101A, 101B HORIZONTAL SURFACE PORTION
102 FLANGE PORTION
110 FLANGE PORTION
120 BATTERY CASE SIDE MEMBER
121 BATTERY CASE BOTTOM SHEET PORTION
122 MOUNTING FLANGE
180 FLOOR CROSS MEMBER SIMULATION PORTION
181 BATTERY CASE SIDE MEMBER SIMULATION PORTION
182 MOUNTING FLANGE SIMULATION PORTION

**Claims**

1. A side sill structure of an automobile, comprising:

a side sill (1) including a side sill inner (1a) on a vehicle inner side and a side sill outer (1b) on a vehicle outer side, and having a closed sectional space (3) formed inside;
a vertical partition member (2) interposed between the side sill inner (1a) and the side sill outer (1b) of the side sill (1), the closed sectional space (3) being partitioned by the vertical partition member (2) into a closed sectional space (3a) on the vehicle inner side and a closed sectional space (3b) on the vehicle outer side; and
an impact absorption structural portion (4) in the closed sectional space (3), wherein
the impact absorption structural portion (4) includes

a horizontal partition member (5) that traverses the closed sectional space (3a) in a vehicle width direction and a horizontal partition member (5) that traverses the closed sectional space (3b) in the vehicle width direction, the horizontal partition members being configured to vertically partition the closed sectional space, and

a bulkhead (6) provided along the vehicle width direction in an upper space (30a) and a bulkhead (6) provided along the vehicle width direction in an upper space (30b), among spaces vertically partitioned by the horizontal partition members (5), wherein

a plurality of the bulkheads (6) are provided in the upper space (30a) and a plurality of the bulk heads (6) are provided in the upper space (30b), at intervals in a vehicle longitudinal direction so as to partition the upper space (30a) and the upper space (30b) into a plurality of spaces in the vehicle longitudinal direction,

each of the horizontal partition members (5) has a bead (7) formed at a position between the bulkheads (6) along the vehicle width direction, wherein a plurality of the beads (7) are provided at intervals in the vehicle longitudinal direction, and

the horizontal partition member (5) and the bulkheads (6) in the closed sectional space (3a) on the vehicle inner side and the horizontal partition member (5) and the bulkheads (6) in the closed sectional space (3b) on the vehicle outer side are provided to face each other in the vehicle width direction with the vertical partition member (2) sandwiched therebetween.

2. The side sill structure of an automobile according to claim 1, wherein

the horizontal partition member (5) in the closed sectional space (3a) on the vehicle inner side is joined to the side sill inner (1a) and the vertical partition member (2), and

the horizontal partition member (5) in the closed sectional space (3b) on the vehicle outer side is joined to the side sill outer (1b) and the vertical partition member (2).

3. The side sill structure of an automobile according to claim 2, wherein

the horizontal partition member (5) in the closed sectional space (3a) on the vehicle inner side has a flange portion (50x) on one end side in the vehicle width direction, and has a flange portion (50y) that is connected upward on the other end side and extends to an upper end portion of the side sill (1) along the vertical partition member (2), the flange portion (50x) on one end side in the vehicle width direction is joined to an inner surface of the side sill inner (1a), and an upper end portion of the flange portion (50y) on the other end side is joined to the side sill inner (1a) and the vertical partition member (2) in a state of being sandwiched between an upper end portion of the side sill inner (1a) and an upper end portion of the vertical partition member (2), and

the horizontal partition member (5) in the closed sectional space (3b) on the vehicle outer side has a flange portion (51x) on one end side in the vehicle width direction, and has a flange portion (51y) that is connected upward on the other end side and extends to the upper end portion of the side sill (1) along the vertical partition member (2), the flange portion (51x) on one end side in the vehicle width direction is joined to an inner surface of the side sill outer (1b), and an upper end portion of the flange portion (51y) on the other end side is joined to the side sill outer (1b) and the vertical partition member (2) in a state of being sandwiched between an upper end portion of the side sill outer (1b) and an upper end portion of the vertical partition member (2).

4. The side sill structure of an automobile according to claim 2, wherein

the horizontal partition member (5) in the closed sectional space (3a) on the vehicle inner side has a flange portion (52x) on one end side in the vehicle width direction, and has a flange portion (52y) that is connected downward on the other end side and extends to a lower end portion of the side sill (1) along the vertical partition member (2), the flange portion (52x) on one end side in the vehicle width direction is joined to an inner surface of the side sill inner (1a), and a lower end portion of the flange portion (52y) on the other end side is joined to the side sill inner (1a) and the vertical partition member (2) in a state of being sandwiched between a lower end portion of the side sill inner (1a) and a lower end portion of the vertical partition member (2), and

the horizontal partition member (5) in the closed sectional space (3b) on the vehicle outer side has a flange portion (53x) on one end side in the vehicle width direction, and has a flange portion (53y) that is connected downward on the other end side and extends to the lower end portion of the side sill (1) along the vertical partition member (2), the flange portion (53x) on one end side in the vehicle width direction is joined to an inner surface of the side sill outer (1b), and a lower end portion of the flange portion (53y) on the other end side is joined to the side sill outer (1b) and the vertical partition member (2) in a state of being sandwiched between a lower end portion of the side sill outer (1b) and a lower end portion of the vertical partition member (2).

5. The side sill structure of an automobile according to claim 2, wherein

the horizontal partition member (5) in the closed sectional space (3a) on the vehicle inner side has a flange portion (54) on each of one end side and the other end side in the vehicle width direction, the flange portion (54) on one end side in the vehicle width direction is joined to an inner surface of the side sill inner (1a), and the flange portion (54) on the other end side is joined to a surface of the vertical partition member (2) on the vehicle inner side, and the horizontal partition member (5) in the closed sectional space (3b) on the vehicle outer side has a flange portion (55) on each of one end side and the other end side in the vehicle width direction, the flange portion (55) on one end side in the vehicle width direction is joined to an inner surface of the side sill outer (1b), and the flange portion (55) on the other end side is joined to a surface of the vertical partition member (2) on the vehicle outer side.

6. The side sill structure of an automobile according to claim 1, wherein

each of the bulkheads (6) in the upper space (30a) on a vehicle body inner side is joined to at least: an upper horizontal surface portion (101A) of the side sill inner (1a); and the horizontal partition member (5), and each of the bulkheads (6) in the upper space (30b) on a vehicle body outer side is joined to at least: a vertical surface portion (100) and the upper horizontal surface portion (101A) of the side sill outer (1b); and the horizontal partition member (5).

7. The side sill structure of an automobile according to claim 1, wherein

the bulkheads (6) include a bulkhead ($6_x$) provided in a region within a width of a floor cross member in a vehicle front-rear direction and a bulkhead ($6_y$) provided in a region outside the width of the floor cross member, and in the vehicle front-rear direction,
the bulkhead ($6_x$) is provided at two or more locations in the region within the width of the floor cross member, and the bulkhead ($6_y$) is provided at one or more locations in the region outside the width of the floor cross member, and
when an interval between two adjacent bulkheads ($6_x$) is represented by w1, and an interval between the bulkhead ($6_x$) and the bulkhead ($6_y$) adjacent thereto is represented by w2, w1 < w2 is satisfied.

8. The side sill structure of an automobile according to claim 7, wherein at least some bulkheads ($6_y$) consist of a bulkhead set including two or more bulkheads provided adjacent to each other.

9. The side sill structure of an automobile according to claim 1, wherein

each of the bulkheads (6) is joined to the horizontal partition member (5) via a flange portion (60), and when a distance (provided that, it is a distance between edge portions of two beads (7)) between two adjacent beads (7) in the vehicle longitudinal direction is represented by $W_H$, and a width of the flange portion (60) of the bulkhead (6) is represented by $W_{BF}$, $W_{BF} \leq W_H \leq 127$ mm is satisfied.

10. The side sill structure of an automobile according to claim 1, wherein a metal sheet constituting the impact absorption structural portion (4) has a yield strength equal to or less than a yield strength of a metal sheet constituting a floor cross member.

11. The side sill structure of an automobile according to claim 1, wherein a metal sheet constituting the impact absorption structural portion (4) has a tensile strength of 780 MPa class or more, or a Vickers hardness (HV) of 250 or more at a position of 1/4 of a sheet thickness of the metal sheet.

12. The side sill structure of an automobile according to claim 1, wherein
a metal sheet constituting the impact absorption structural portion (4) is a steel sheet containing:

by mass%,
C: 0.030% or more and 0.250% or less,
Si: 0.01% or more and 2.50% or less,
Mn: 1.00% or more and less than 3.50%,
P: 0.001% or more and 0.100% or less,
S: 0.0200% or less, and
Al: 0.010% or more and 2.000% or less.

13. The side sill structure of an automobile according to claim 1, wherein a metal sheet constituting the impact absorption structural portion (4) has a steel structure including, at a position of 1/4 of a sheet thickness of the metal sheet, ferrite in an area ratio of 0% or more and 65% or less, martensite and tempered martensite in a total area ratio of 30% or more and 100% or less, and residual austenite in an area ratio of 0% or more and 15% or less.

14. The side sill structure of an automobile according to claim 1, wherein a metal sheet constituting the impact absorption structural portion (4) has an ultimate deformability of 0.55 or more in a tensile test.

15. The side sill structure of an automobile according to claim 1, wherein a critical curvature radius R (mm) at which a crack does not occur when a 90° V-bending test is performed and a sheet thickness t (mm) of a metal sheet constituting the impact absorption structural portion (4) satisfy $R/t \leq 7.0$.

16. A vehicle body lower structure of an automobile, comprising:

   side sills (1) disposed on both sides of a vehicle body lower portion along a vehicle longitudinal direction;
   a floor cross member (10) disposed on a floor panel (11) along a vehicle width direction and connecting both side sills (1); and
   a battery case (12) disposed between both side sills (1) on a lower side of the floor cross member (10), wherein the vehicle body lower structure comprises the side sill structure of an automobile according to any one of claims 1 to 15,
   a battery case side member (120) of the battery case (12) and the side sill (1) are adjacent to each other in the vehicle width direction and disposed at positions where at least parts thereof overlap each other when viewed from a side of the vehicle, and
   a horizontal partition member (5) is provided such that the battery case side member (120) is positioned on a horizontal extension thereof.

17. The vehicle body lower structure of an automobile according to claim 16, wherein a crashworthiness load of a member constituting an impact absorption structural portion (4) is equal to or less than a crashworthiness load of the floor cross member (10) and the battery case side member (120).

18. A vehicle body lower structure of an automobile, comprising:

   side sills (1) disposed on both sides of a vehicle body lower portion along a vehicle longitudinal direction; and
   a floor cross member (10) disposed on a floor panel (11) along a vehicle width direction and connecting both side sills (1), wherein
   the vehicle body lower structure comprises the side sill structure of an automobile according to any one of claims 1 to 15, and
   a horizontal partition member (5) is provided such that the floor cross member (10) is positioned on a horizontal extension thereof.

19. The vehicle body lower structure of an automobile according to claim 18, wherein a crashworthiness load of a member constituting an impact absorption structural portion (4) is equal to or less than a crashworthiness load of the floor cross member (10).

FIG.1

# FIG.2

VEHICLE OUTER SIDE

VEHICLE INNER SIDE

# FIG.3

FIG.4

EP 4 647 325 A1

# FIG.5

$W_F$

# FIG.6

(a)

VEHICLE REAR SIDE ◄————► VEHICLE FRONT SIDE

(b)

VEHICLE REAR SIDE ◄————► VEHICLE FRONT SIDE

(c)

VEHICLE REAR SIDE ◄————► VEHICLE FRONT SIDE

FIG.7

(a)

(b)

(c)

EP 4 647 325 A1

# FIG.8

VEHICLE
UPPER SIDE

VEHICLE
OUTER
SIDE

# FIG.9

VEHICLE UPPER SIDE

VEHICLE OUTER SIDE

EP 4 647 325 A1

# FIG.10

FIG.11

(b)

16

17

180
181
182

18

(a)

16

17

b

181

180

b

182

18

260mm

80mm

260mm

# FIG.12-1

## INVENTION EXAMPLE 1

(a)

# FIG.12-2

## INVENTION EXAMPLE 2

(b)

# FIG.12-3

## COMPARATIVE EXAMPLE 1 (WITHOUT BEAD)

(c)

BULKHEAD  SIDE SILL

HORIZONTAL PARTITION MEMBER  IMPACT OBJECT  SIDE SILL

BULKHEAD

BULKHEAD

HORIZONTAL PARTITION MEMBER  FLOOR CROSS MEMBER  VERTICAL PARTITION MEMBER

VERTICAL PARTITION MEMBER

HORIZONTAL PARTITION MEMBER

# FIG.12-4

## COMPARATIVE EXAMPLE 2 (WITHOUT BULKHEAD)

(d)

SIDE SILL

IMPACT OBJECT  SIDE SILL

VERTICAL PARTITION MEMBER

VERTICAL PARTITION MEMBER  FLOOR CROSS MEMBER

HORIZONTAL PARTITION MEMBER

HORIZONTAL PARTITION MEMBER

# FIG.12-5

## COMPARATIVE EXAMPLE 3 (BULKHEAD ONLY)

(e)

SIDE SILL

BULKHEAD

VERTICAL PARTITION MEMBER

IMPACT OBJECT

SIDE SILL

VERTICAL PARTITION MEMBER

BULKHEAD

FLOOR CROSS MEMBER

# FIG.12-6

## COMPARATIVE EXAMPLE 4 (WITHOUT ENERGY-ABSORBING MEMBER)

(f)

SIDE SILL

IMPACT OBJECT

SIDE SILL

FLOOR CROSS MEMBER

## FIG.13-1

(a) INVENTION EXAMPLES 1 AND 2

(b) COMPARATIVE EXAMPLE 1

# FIG.13-2

(c) COMPARATIVE
EXAMPLE 2

(d) COMPARATIVE
EXAMPLE 3

(e) COMPARATIVE
EXAMPLE 4

FIG.14

FIG.15

## INTERNATIONAL SEARCH REPORT

| International application No. |
|---|
| **PCT/JP2023/040552** |

| A. | CLASSIFICATION OF SUBJECT MATTER |
|---|---|

*B62D 25/20*(2006.01)i; *B60K 1/04*(2019.01)i
FI:    B62D25/20 F; B60K1/04 Z

According to International Patent Classification (IPC) or to both national classification and IPC

| B. | FIELDS SEARCHED |
|---|---|

Minimum documentation searched (classification system followed by classification symbols)

B62D17/00-25/08; B62D25/14-29/04; B60K1/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2019-202743 A (HONDA MOTOR CO., LTD.) 28 November 2019 (2019-11-28) | 1-19 |
| A | JP 2020-111145 A (KABUSHIKI KAISHA KOBE SEIKO SHO) 27 July 2020 (2020-07-27) | 1-19 |
| A | JP 2017-39337 A (TOYOTA JIDOSHA KABUSHIKI KAISHA) 23 February 2017 (2017-02-23) | 1-19 |
| A | CN 211809888 U (WUHAN GROVE HYDROGEN AUTOMOBILE CO., LTD.) 30 October 2020 (2020-10-30) | 1-19 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 January 2024** | **30 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2023/040552**

| Patent document cited in search report | | | Publication date (day/month/year) | Patent family member(s) | | | Publication date (day/month/year) |
|---|---|---|---|---|---|---|---|
| JP | 2019-202743 | A | 28 November 2019 | US | 2019/0359265 | A1 | |
| | | | | CN | 110588802 | A | |
| JP | 2020-111145 | A | 27 July 2020 | (Family: none) | | | |
| JP | 2017-39337 | A | 23 February 2017 | (Family: none) | | | |
| CN | 211809888 | U | 30 October 2020 | (Family: none) | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021157651 A
- JP 2018131133 A
- JP 2019202743 A
- WO 2020070935 A